(19) Europäisches Patentamt
European Patent Office
Office européen des brevets

(11) EP 4 015 549 A1

(12) EUROPÄISCHE PATENTANMELDUNG

(43) Veröffentlichungstag:
**22.06.2022 Patentblatt 2022/25**

(21) Anmeldenummer: **20215425.8**

(22) Anmeldetag: **18.12.2020**

(51) Internationale Patentklassifikation (IPC):
***C08G 18/08*** (2006.01) ***C08G 18/32*** (2006.01)
***C08G 18/73*** (2006.01) ***C08K 5/00*** (2006.01)
***C08K 5/134*** (2006.01) ***C08K 5/20*** (2006.01)
***C08K 5/13*** (2006.01) ***C08G 18/80*** (2006.01)

(52) Gemeinsame Patentklassifikation (CPC):
(C-Sets verfügbar)
**C08G 18/3206; C08G 18/0895; C08G 18/73; C08G 18/8016; C08K 5/1345;** C08K 5/13; C08K 5/20 (Forts.)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder:
- **Wandner, Derk**
  **51519 Odenthal (DE)**
- **Bischoffs, Werner**
  **51143 Köln (DE)**
- **Leipnitz, Sascha**
  **47447 Moers (DE)**

(74) Vertreter: **Levpat**
**c/o Covestro AG**
**Gebäude 4825**
**51365 Leverkusen (DE)**

# (54) THERMOPLASTISCHE FORMMASSE MIT GUTEN MECHANISCHEN EIGENSCHAFTEN

(57) Die Erfindung betrifft eine thermoplastische Formmasse enthaltend
A) mindestens ein thermoplastisches Polyurethanpolymer erhältlich durch die Umsetzung von mindestens folgenden Aufbaukomponenten:
I) einem oder mehreren aliphatischen Diisocyanaten mit einem Molekulargewicht von 140 g/mol bis 170 g/mol und
II) einem oder mehreren aliphatischen Diolen mit einem Molekulargewicht von 62 g/mol bis 120 g/mol,
wobei die zur Erzeugung des thermoplastischen Polyurethanpolymers eingesetzten Aufbaukomponenten zu mindestens 95 Gew.-% aus einem oder mehreren aliphatischen Diisocyanaten I) und einem oder mehreren aliphatischen Diolen II), bezogen auf die Gesamtmasse der eingesetzten Aufbaukomponenten, bestehen, wobei die einen oder mehreren aliphatischen Diisocyanate I) und die einen oder mehreren aliphatischen Diole II) in einem molaren Verhältnis im Bereich von 1,0 : 0,95 bis 0,95 : 1,0 eingesetzt werden, dadurch gekennzeichnet, dass das Verhältnis $\overline{M}_z/\overline{M}_w$ des thermoplastischen Polyurethanpolymers in einem Bereich von 2,3 bis 6 liegt, wobei $\overline{M}_z$ das Zentrifugenmittel der Molmasse und $\overline{M}_w$ das Massenmittel der Molmasse ist, jeweils bestimmt durch Gelpermeationschromatographie in Hexafluoroisopropanol gegen Polymethylmethacrylat als Standard
B) mindestens ein sterisch gehindertes Phenol,
sowie die Verwendung der Formmasse zur Herstellung von Formkörpern und die Formkörper selbst.

EP 4 015 549 A1

(52) Gemeinsame Patentklassifikation (CPC): (Forts.)

C-Sets
**C08G 18/8016, C08G 18/73;**
**C08K 5/1345, C08L 75/04;**
C08K 5/13, C08L 75/04;
C08K 5/20, C08L 75/04

## Beschreibung

Die Erfindung betrifft ein eine thermoplastische Formmasse enthaltend ein thermoplastisches Polyurethan und mindestens ein sterisch gehindertes Phenol, die Verwendung der Formmasse zur Herstellung von Formkörpern sowie die Formkörper selbst.

Polyurethane und insbesondere thermoplastische Polyurethane werden aufgrund ihrer hervorragenden physikalischen Eigenschaften seit Jahren für die unterschiedlichsten Einsatzzwecke verwendet. In manchen Anwendungsbereichen allerdings werden andere Kunststoffe, wie beispielsweise Polyamid-Kunststoffe, verwendet, weil keine Polyurethane mit geeigneten physikalischen Eigenschaften verfügbar sind oder diese nur schwer bereitgestellt werden können.

Polyurethane, die aus kurzkettigen aliphatischen Diolen und kurzkettigen aliphatischen Isocyanaten sowie Polyisocyanaten aufgebaut sind, weisen vergleichbare oder bessere Eigenschaften zu den Polyamid-Kunststoffen auf, beispielsweise bezüglich der Lackierbarkeit des Kunststoffs.

Für solche Polyurethane sind verschiedene Herstellungsverfahren bekannt.

O. Bayer (Angew. Chem. 1947, 59, 257-288) offenbart die Herstellung von Polyurethanen aus aliphatischen Diisocyanaten und aliphatischen Diolen im Batch-Verfahren, insbesondere ein Polyurethan aus 1,6-Hexamethylendiisocyanat und 1,4-Butandiol (Perlon U, Igamid U), welches als feines, sandiges Pulver aus einer Fällungspolymerisation in Dichlorbenzol erhalten wird.

DE728981 offenbart die Herstellung von Polyurethanen und Polyharnstoffen in einem lösungsmittelhaltigen oder lösungsmittelfreien Batch-Verfahren.

V. V. Korshak (Soviet Plastics 1961, 7, 12-15) offenbart ein Semi-Batch-Laborverfahren zur Herstellung eines Polyurethans aus 1,6-Hexamethylendiisocyanat und 1,4-Butandiol. Hierzu wird 1,6-Hexamethylendiisocyanat tropfenweise in erhitztes 1,4-Butandiol eingetragen, was zu einem spröden Additionsprodukt führt.

Allerdings erweisen sich die vielfältigen Reaktionsmöglichkeiten der Isocyanate als nachteilig für die Herstellung von thermoplastischen Polyurethanen. Durch die Polyadditionsreaktion zwischen Isocyanat- und Hydroxygruppen entstehen erst bei sehr hohen Umsatzgraden Molekulargewichte, die gute mechanische Eigenschaften erwarten lassen. Bei hohen Umsatzgraden steigt aber auch die Neigung zu Nebenreaktionen, wie zum Beispiel der Bildung von Allophanat-, Biuret- oder Isocyanuratgruppen, die Verzweigungspunkte in der Polymerstruktur darstellen und dadurch den thermoplastischen Charakter reduzieren oder im Extremfall sogar Duromere ergeben (G. Oertel, Kunststoff-Handbuch, Bd. 7, 3. Aufl., 1993, S.12ff).

Daher sind die konkrete Molekülstruktur und auch die Molmassenverteilung vom Herstellverfahren abhängig. Diese Abhängigkeit wirkt sich in der Folge auch auf die mechanischen Eigenschaften der thermoplastischen Polyurethane aus.

Thermoplastische Polyurethane basierend auf kurzkettigen aliphatischen Diolen und kurzkettigen aliphatischen Polyisocyanaten weisen eine im Vergleich zu anderen Thermoplasten eher niedrige Erweichungs- bzw. Schmelztemperatur auf. Das ist für die Verarbeitung zu Formkörpern günstig, weil somit keine besonders hohen Temperaturen zum Aufschmelzen nötig sind.

Trotzdem können die hergestellten Formkörper in manchen Anwendungen höheren Temperaturen ausgesetzt sein und das auch über einen längeren Zeitraum. Unter solchen Bedingungen kann es zu Schädigungen der Molekülstruktur und/oder einem Abbau des Molekulargewichts kommen, so dass sich beispielsweise die mechanischen Eigenschaften wie etwa die Zugfestigkeit deutlich verschlechtern.

Es war daher wünschenswert, eine thermoplastische Formmasse enthaltend ein thermoplastisches Polyurethan bereitzustellen, die sich bei längerer Lagerung unter hohen Temperaturen durch einen verbesserten Erhalt der mechanischen Eigenschaften, insbesondere der Zugfestigkeit, auszeichnet.

Überraschenderweise hat sich gezeigt, dass eine thermoplastische Formmasse enthaltend

A) mindestens ein thermoplastisches Polyurethanpolymer erhältlich durch die Umsetzung von mindestens folgenden Aufbaukomponenten:

I) einem oder mehreren aliphatischen Diisocyanaten mit einem Molekulargewicht von 140 g/mol bis 170 g/mol und

II) einem oder mehreren aliphatischen Diolen mit einem Molekulargewicht von 62 g/mol bis 120 g/mol,

wobei die zur Erzeugung des thermoplastischen Polyurethanpolymers eingesetzten Aufbaukomponenten zu mindestens 95 Gew.-% aus einem oder mehreren aliphatischen Diisocyanaten I) und einem oder mehreren aliphatischen Diolen II), bezogen auf die Gesamtmasse der eingesetzten Aufbaukomponenten, bestehen, wobei die einen oder mehreren aliphatischen Diisocyanate I) und die einen oder mehreren aliphatischen Diole II) in einem molaren Verhältnis im Bereich von 1,0 : 0,95 bis 0,95 : 1,0 eingesetzt werden, dadurch gekennzeichnet, dass das Verhältnis

$\overline{M}_z/\overline{M}_w$ des thermoplastischen Polyurethanpolymers in einem Bereich von 2,3 bis 6 liegt, wobei $\overline{M}_z$ das Zentrifugenmittel der Molmasse und $\overline{M}_w$ das Massenmittel der Molmasse ist, jeweils bestimmt durch Gelpermeationschromatographie in Hexafluoroisopropanol gegen Polymethylmethacrylat als Standard
B) mindestens ein sterisch gehindertes Phenol,

die gewünschten Eigenschaften aufweist.

Die Formmasse enthält bevorzugt 0,005 bis 1,5 Gew.-%, weiter bevorzugt 0,01 bis 0,8 Gew.-% der Komponente B

Optional enthält die Formmasse neben den Komponenten A und B als Komponente C weitere Polymeradditive, Füllstoffe und/oder weitere polymere Komponenten.

Die Formmasse enthält bevorzugt 38,5 bis 99,995 Gew.-% der Komponente A, 0,005 bis 1,5 Gew.-% der Komponente B und 0 bis 60 Gew.-% der Komponente C, weiter bevorzugt 79,5 bis 99,89 Gew.-% der Komponente A, 0,01 bis 0,8 Gew.-% der Komponente B und 0,1 bis 20 Gew.-% der Komponente C.

In einer bevorzugten Ausführungsform besteht die Formmassen zu mindestens 80 Gew.-%, weiter bevorzugt zu mindestens 90 Gew.-%, besonders bevorzugt zu mindestens 95 Gew.-% und am meisten bevorzugt zu 100 Gew.-% aus den Komponenten A, B und C.

Eine weitere Aufgabe der Erfindung war es, Formkörper enthaltend die thermoplastische Formmasse bereitzustellen.

**Komponente A**

Bei der Komponente A handelt es sich um ein thermoplastisches Polyurethan erhältlich durch die Umsetzung von mindestens folgenden Aufbaukomponenten:

I) einem oder mehreren aliphatischen Diisocyanaten mit einem Molekulargewicht von 140 g/mol bis 170 g/mol und
II) einem oder mehreren aliphatischen Diolen mit einem Molekulargewicht von 62 g/mol bis 120 g/mol,

wobei die zur Erzeugung des thermoplastischen Polyurethans eingesetzten Aufbaukomponenten zu mindestens 95 Gew.-% aus einem oder mehreren aliphatischen Diisocyanaten I) und einem oder mehreren aliphatischen Diolen II), bezogen auf die Gesamtmasse der eingesetzten Aufbaukomponenten, bestehen, wobei die einen oder mehreren aliphatischen Diisocyanate I) und die einen oder mehreren aliphatischen Diole II) in einem molaren Verhältnis im Bereich von 1,0 : 0,95 bis 0,95 : 1,0 eingesetzt werden, dadurch gekennzeichnet, dass das Verhältnis $\overline{M}_z/\overline{M}_w$ des thermoplastischen Polyurethanpolymers in einem Bereich von 2,3 bis 6, bevorzugt im Bereich von 2,5 bis 5,5, besonders bevorzugt im Bereich von 2,5 bis 5, liegt, wobei $\overline{M}_z$ das Zentrifugenmittel der Molmasse und $\overline{M}_w$ das Massenmittel der Molmasse ist, jeweils bestimmt durch Gelpermeationschromatographie in Hexafluoroisopropanol gegen Polymethylmethacrylat als Standard.

Die in den erfindungsgemäßen Formmassen eingesetzten thermoplastischen Polyurethane können geringe duroplastische Anteile, wie sie beispielsweise durch Allophanatstrukturelemente, Biuretstrukturelemente oder durch die anteilige Verwendung von Triolen bzw. Triisocyanaten als Monomere entstehen, in der Polymermatrix enthalten, aber nur so viel, dass die thermoplastischen Eigenschaften der erfindungsgemäßen Polyurethane erhalten bleiben. Typischerweise sind dies 0,05-5 Gew.-%, vorzugsweise 0,1-4 Gew.-%, besonders bevorzugt 0,3-3 Gew.-%, noch bevorzugter 0,5-2 Gew.-% und ganz besonders bevorzugt 0,5-1 Gew.-% duroplastische Anteile, bezogen auf das Gesamtgewicht des erfindungsgemäßen thermoplastischen Polymers.

Falls nicht explizit anders angegeben beziehen sich alle Prozentangaben auf das Gewicht (Gew.-%). Die Angabe Gew.-% bezieht sich dabei auf das Gesamtgewicht des jeweiligen Systems oder das Gesamtgewicht der jeweiligen Komponente. Zum Beispiel kann ein Copolymer ein bestimmtes Monomer in Gew.-% angegeben enthalten, in diesem Fall würden sich die Gewichtsprozente auf das Gesamtgewicht des Copolymers beziehen.

Das Wort "ein" im Zusammenhang mit zählbaren Größen ist im Rahmen der vorliegenden Erfindung nur dann als Zahlwort zu verstehen, wenn dies ausdrücklich gesagt wird (z. B. durch den Ausdruck "genau ein"). Wenn im Folgenden beispielsweise von "einem Polyol" gesprochen wird, ist das Wort "ein" lediglich als unbestimmter Artikel und nicht als Zahlwort aufzufassen, es ist also damit auch eine Ausführungsform umfasst, die ein Gemisch aus mindestens zwei Polyolen enthält.

Bevorzugt bedeuten erfindungsgemäß die Ausdrücke "umfassend" oder "enthaltend", "im Wesentlichen bestehend aus" und besonders bevorzugt "bestehend aus".

Falls nicht explizit anders angegeben, werden in der vorliegende Erfindung das Zentrifugenmittel der Molmasse $\overline{M}_z$, das Massenmittel der Molmasse $\overline{M}_w$ und $x_{90}$ mittels Gelpermeationschromatographie (GPC) unter Verwendung von Polymethylmethacrylat als Standard bestimmt. Die zu vermessende Probe wird in einer Lösung von 3 g Kaliumtrifluoracetat in 400 Kubikzentimeter Hexafluorisopropanol aufgelöst (Probenkonzentration ca. 2 mg/Kubikzentimeter), dann mit einer Flussrate von 1 Kubikzentimeter/Minute über eine Vorsäule gegeben und anschließend über drei in Reihe geschaltete Chromatographiesäulen getrennt, zuerst über eine 1000 Å PSS PFG 7 μm Chromatographiesäule, dann über eine 300 Å PSS PFG 7 μm Chromatographiesäule und zuletzt über eine 100 Å PSS PFG 7 μm Chromatographiesäule. Als Detektor wurde ein Brechungsindex-Detektor (RI-Detektor) verwendet.

Das Zentrifugenmittel der Molmasse ($\overline{M}_z$) wurde aus den durch die Messung der Gelpermeationschromatographie erhaltenen Daten mit Hilfe der folgenden Gleichung errechnet:

$$\overline{M}_z = \frac{\sum_i n_i M_i^3}{\sum_i n_i M_i^2} \quad \text{in g/mol}$$

wobei:

$M_i$ die molare Masse der Polymere der Fraktion i ist, so dass $M_i < M_{i+1}$ für alle i, in g/mol ist,

$n_i$ die Stoffmenge des Polymers der Fraktion i, in mol ist.

Das Massenmittel der Molmasse ($\overline{M}_w$) wurde ebenfalls aus den durch die Messung der Gelpermeationschromatographie erhaltenen Daten mit Hilfe der folgenden Gleichung errechnet:

$$\overline{M}_w = \frac{\sum_i n_i M_i^2}{\sum_i n_i M_i} \quad \text{in g/mol}$$

wobei:

$M_i$ die molare Masse der Polymere der Fraktion i ist, so dass $M_i < M_{i+1}$ für alle i, in g/mol ist,

$n_i$ die Stoffmenge des Polymers der Fraktion i, in mol ist.

In einer bevorzugten Ausführungsform liegt das Verhältnis $\overline{M_z}/\overline{M_w}$ des thermoplastischen Polyurethanpolymers in einem Bereich von 2,5 bis 5,5, vorzugsweise in einem Bereich von 2,5 bis 5.

In einer bevorzugten Ausführungsform liegt der $\overline{M}_z$-Wert des thermoplastischen Polyurethanpolymers in einem Bereich von 80000 g/mol bis 900000 g/mol, vorzugsweise in einem Bereich von 80000 g/mol bis 850000 g/mol, besonders bevorzugt in einem Bereich von 85000 g/mol bis 800000 g/mol und noch bevorzugter in einem Bereich von 85000 g/mol bis 760000 g/mol, bestimmt durch Gelpermeationschromatographie in Hexafluoroisopropanol gegen Polymethylmethacrylat als Standard.

In einer bevorzugten Ausführungsform besteht das thermoplastische Polyurethanpolymer zu mindestens 96 Gew.-%, vorzugsweise zu mindestens 97 Gew.-%, besonders bevorzugt zu mindestens 98 Gew.-%, noch bevorzugter zu mindestens 99 Gew.-%, noch mehr bevorzugter zu mindestens 99,5 Gew.-% und am bevorzugtesten zu mindestens 99,9 Gew.-% aus einem oder mehreren aliphatischen Diisocyanaten I) und einem oder mehreren aliphatischen Diolen II), bezogen auf die Gesamtmasse des Polyurethanpolymers.

Als aliphatische Diisocyanate I) eigenen sich alle dem Fachmann bekannten monomeren aliphatischen Diisocyanate, die ein Molekulargewicht von 140 g/mol bis 170 g/mol aufweisen. Es ist dabei unerheblich, ob die Diisocyanate mittels Phosgenierung oder nach einem phosgenfreien Verfahren erhalten wurden. Die Diisocyanate und / oder dessen Vorläuferverbindungen können aus fossilen oder biologischen Quellen gewonnen worden sein. Vorzugsweise wird 1,6-Diisocyanatohexan (HDI) aus 1,6-Hexamethylendiamin und 1,5-Diisocyanatopentan aus 1,5-Pentamethylendiamin hergestellt, wobei 1,6-Hexamethylendiamin und 1,5-Pentamethylendiamin aus biologischen Quellen, vorzugsweise durch bakterielle Fermentation, gewonnen werden. Bevorzugt sind die aliphatischen Diisocyanate zum Aufbau des erfindungsgemäßen thermoplastischen Polyurethanpolymers ausgewählt aus der Gruppe bestehend aus 1,4-Diisocyanatobutan (BDI), 1,5-Diisocyanatopentan (PDI), 1,6-Diisocyanatohexan (HDI) und 2-Methyl-1,5-diisocyanatopentan oder einer Mischung von mindestens zwei hieraus.

In einer bevorzugten Ausführungsform ist das eine oder sind die mehreren aliphatischen Diisocyanate I) ausgewählt aus der Gruppe bestehend aus 1,4-Diisocyanatobutan, 1,5-Diisocyanatopentan, 1,6-Diisocyanatohexan, 2-Methyl-1,5-diisocyanatopentan und / oder Mischungen aus mindestens zwei hieraus. In einer anderen bevorzugten Aufführungsform werden 1,5-Diisocyanatopentan und / oder 1,6-Diisocyanatohexan als aliphatische Diisocyanate I)

eingesetzt. In einer weiteren bevorzugten Aufführungsform wird nur 1,6-Diisocyanatohexan als aliphatisches Diisocyanat I) eingesetzt.

Als aliphatische Diole II) eignen sich alle dem Fachmann bekannten organische Diole die ein Molekulargewicht von 62 g/mol bis 120 g/mol aufweisen. Die Diole und / oder dessen Vorläuferverbindungen können aus fossilen oder biologischen Quellen gewonnen worden sein. Bevorzugt sind die aliphatischen Diole zum Aufbau des erfindungsgemäßen thermoplastischen Polyurethanpolymers ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,2-Pentandiol, 1,3-Pentandiol, 1,4-Pentandiol, 1,5-Pentandiol, 1,2-Hexandiol, 1,3-Hexandiol, 1,4-Hexandiol, 1,5-Hexandiol und 1,6-Hexandiol oder einer Mischung aus mindestens zwei hieraus.

In einer bevorzugten Ausführungsform ist das eine oder sind die mehreren aliphatischen Diole II) ausgewählt sind aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol und / oder Mischungen aus mindestens zwei hieraus. In einer weiteren bevorzugten Aufführungsform werden 1,3-Propandiol, 1,4-Butandiol, 1,6-Hexandiol und / oder Mischungen aus mindestens zwei hieraus als aliphatische Diole II) eingesetzt. In einer weiteren bevorzugten Aufführungsform werden 1,4-Butandiol und / oder 1,6-Hexandiol als aliphatische Diole II) eingesetzt. In einer anderen bevorzugten Aufführungsform wird nur 1,4-Butandiol als aliphatisches Diol eingesetzt.

In einer weiteren bevorzugten Ausführungsform ist das thermoplastische Polyurethanpolymer erhältlich durch die Umsetzung von mindestens folgenden Aufbaukomponenten:

I) einem oder mehreren aliphatischen Diisocyanaten ausgewählt aus der Gruppe bestehend aus 1,4-Diisocyanatobutan, 1,5-Diisocyanatopentan, 1,6-Diisocyanatohexan, 2-Methyl-1,5-diisocyanatopentan und / oder Mischungen aus mindestens zwei hieraus und
II) einem oder mehreren aliphatischen Diolen ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol oder Mischungen aus mindestens zwei hieraus,

wobei die zur Erzeugung des thermoplastischen Polyurethanpolymers eingesetzten Aufbaukomponenten zu mindestens 95 Gew.-%, vorzugsweise zu mindestens 98 Gew.-%, besonders bevorzugt zu mindestens 99 Gew.-%, noch bevorzugter zu 99,5 Gew.-% aus einem oder mehreren aliphatischen Diisocyanaten I) und einem oder mehreren aliphatischen Diolen II), bezogen auf die Gesamtmasse der eingesetzten Aufbaukomponenten, bestehen, wobei die einen oder mehreren aliphatischen Diisocyanate I) und die einen oder mehreren aliphatischen Diole II) in einem molaren Verhältnis im Bereich von 1,0 : 0,95 bis 0,95 : 1,0 eingesetzt werden, dadurch gekennzeichnet, dass das Verhältnis $\overline{M_z}/\overline{M_w}$ des thermoplastischen Polyurethanpolymers in einem Bereich von 2,3 bis 6 liegt, wobei $\overline{M}_z$ das Zentrifugenmittel der Molmasse und $\overline{M}_w$ das Massenmittel der Molmasse ist, jeweils bestimmt durch Gelpermeationschromatographie in Hexafluoroisopropanol gegen Polymethylmethacrylat als Standard.

Als weitere Aufbaukomponenten zur Erzeugung des thermoplastischen Polyurethanpolymers können, neben dem mindestens einem oder den mehreren aliphatischen Diisocyanaten I) und dem einem oder den mehreren aliphatischen Diolen II), auch ein oder mehrere Polyisocyanate III) und / oder ein oder mehrere NCO-reaktive Verbindungen IV) eingesetzt werden. Diese weiteren Aufbaukomponenten III) und/oder IV) sind von den Aufbaukomponenten I) und II) unterschiedlich und können in einer Menge von 0 Gew.-% bis 5 Gew.-% eingesetzt werden. In einer bevorzugten Ausführungsform bestehen die zur Erzeugung des thermoplastischen Polyurethanpolymers eingesetzten Aufbaukomponenten zu 0,1 Gew.-% bis 5 Gew.-% aus einem oder mehreren Polyisocyanaten III) und / oder einer oder mehreren NCO-reaktive Verbindungen IV), bezogen auf die Gesamtmasse der eingesetzten Aufbaukomponenten. Die Isocyanat-Komponenten I) und gegebenenfalls III) werden mit den Isocyanatreaktiven-Komponenten II) und gegebenenfalls IV) in einem molaren Verhältnis von Isocyanat-Komponente : Isocyanatreaktiver-Komponente im Bereich von 1,0 : 0,95 bis 0,95 : 1,0 eingesetzt.

In einer weiteren bevorzugten Ausführungsform ist das thermoplastische Polyurethanpolymer erhältlich durch die Umsetzung von mindestens folgenden Aufbaukomponenten:

I) einem oder mehreren aliphatischen Diisocyanaten mit einem Molekulargewicht von 140 g/mol bis 170 g/mol,
II) einem oder mehreren aliphatischen Diolen mit einem Molekulargewicht von 62 g/mol bis 120 g/mol,
III) einem oder mehreren Polyisocyanaten, und / oder
IV) einer oder mehreren NCO-reaktive Verbindungen,

wobei die zur Erzeugung des thermoplastischen Polyurethanpolymers eingesetzten Aufbaukomponenten zu mindestens 95 Gew.-% aus einem oder mehreren aliphatischen Diisocyanaten I) und einem oder mehreren aliphatischen Diolen II) und zu ≤ 5 Gew.-% aus einem oder mehreren Polyisocyanaten III) und / oder einer oder mehreren NCO-reaktive

Verbindungen IV) bestehen, bezogen auf die Gesamtmasse der eingesetzten Aufbaukomponenten.

Als Polyisocyanat III) zum Aufbau des erfindungsgemäßen Polyurethanpolymers eignen sich alle dem Fachmann an sich bekannten aliphatischen, cycloaliphatischen, aromatischen oder araliphatischen Di- und Triisocyanate, wobei es unerheblich ist, ob diese mittels Phosgenierung oder nach phosgenfreien Verfahren erhalten wurden. Die Polyisocyanate und / oder dessen Vorläuferverbindungen können aus fossilen oder biologischen Quellen gewonnen worden sein. Daneben können auch die dem Fachmann an sich gut bekannten höhermolekularen Folgeprodukte (Oligo- und Polyisocyanate sowie NCO-Gruppen aufweisende Prepolymere, insbesondere NCO-Gruppen aufweisende Polyurethanprepolymere) monomerer Di- und/oder Triisocyanate mit Urethan-, Harnstoff-, Carbodiimid-, Acylharnstoff-, Isocyanurat-, Allophanat-, Biuret-, Oxadiazintrion-, Uretdion-, Iminooxadiazindionstruktur jeweils einzeln oder in beliebigen Mischungen untereinander eingesetzt werden. Bevorzugt als Polyisocyanat III) sind monomere Diisocyanate die ein Molekulargewicht von $\geq$ 140 bis $\leq$ 400 g/mol aufweisen.

Beispiele für geeignete aliphatische Diisocyanate sind 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan und 1,10-Diisocyanatodecan.

Beispiele für geeignete cycloaliphatische Diisocyanate sind 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H12MDI), 1,3- und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan und 1,3-Dimethyl-5,7-diisocyanatoadamantan.

Beispiele für geeignete aromatische Diisocyanate sind 2,4- und 2,6-Diisocyanatotoluol (TDI), 2,4'- und 4,4'-Diisocyanatodiphenylmethan (MDI) und 1,5-Diisocyanatonaphthalin.

Beispiele für geeignete araliphatische Diisocyanate sind 1,3- und 1,4-Bis-(isocyanatomethyl)benzol (Xylylendiisocyanat; XDI), 1,3- und 1,4-Bis(1-isocyanato-1-methylethyl)-benzol (TMXDI).

Beispiele für geeignete Triisocyanate sind Triphenylmethan-4,4',4"-triisocyanat oder 4-Isocyanatomethyl-1,8 -octandiisocyanat (TIN).

Weitere ebenfalls geeignete Diisocyanate finden sich darüber hinaus beispielsweise in HOUBEN-WEYL "Methoden der organischen Chemie", Band E20 "Makromolekulare Stoffe", Georg Thieme Verlag, Stuttgart, New York 1987, S. 1587-1593 oder in Justus Liebigs Annalen der Chemie Band 562 (1949) S. 75 - 136.

Als NCO-reaktive Verbindung IV) zum Aufbau des erfindungsgemäßen Polyurethanpolymers eignen sich alle dem Fachmann an sich bekannten organischen Verbindungen, die wenigstens zwei isocyanatreaktive (NCO-reaktive) Gruppen aufweisen (NCO-reaktive Verbindung bzw. isocyanatreaktive Verbindung). Im Rahmen der vorliegenden Erfindung werden als NCO-reaktive Gruppen insbesondere Hydroxy-, Amino- oder Thiogruppen angesehen. In Sinne der Erfindung kann auch ein Gemisch aus verschiedenen NCO-reaktiven Verbindungen zum Aufbau des mindestens eines weiteren Strukturelementes (S) verwendet werden.

Als NCO-reaktive Verbindung IV) können alle Systeme eingesetzt werden, die im Mittel wenigstens 1,5, bevorzugt 2 bis 3 und noch bevorzugter 2 NCO-reaktive Gruppen aufweisen.

Geeignete isocyanatreaktive Verbindungen sind beispielsweise aliphatische, araliphatische oder cycloaliphatische Diole, organische Triole, Polyester-, Polyether-, Polycarbonat-, Poly(meth)acrylat- , Polyurethanpolyole und Polyamine.

Beispiele für aliphatische, araliphatische oder cycloaliphatische Diole sind 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol, 1,9-Nonandiol, 1,10-Decandiol, 1,11-Undecandiol, 1,12-Dodecandiol, 1,3-Cyclobutandiol, 1,3-Cyclopentandiol, 1,2-, 1,3- und 1,4-Cyclohexandiol, 1,4-Cyclohexandimethanol, 2-Cyclohexen-1,4-diol, 2-Methyl-1,4-cyclohexandiol, 2-Ethyl-1,4-cyclohexandiol, 2,2,4,4-Tetramethyl-1,3-cyclobutandiol, hydriertes Bisphenol A (2,2-Bis(4-hydroxycyclohexyl)propan), 1,3-Cycloheptandiol, 1,4-Cycloheptandiol, 2-Methyl-1,4-cycloheptandiol, 4-Methyl-1,3-cycloheptandiol, 4,4'-(1-Methylethyliden)-biscyclohexanol, 1,3-Cyclooctandiol, 1,4-Cyclooctandiol, 1,5-Cyclooctandiol, 5-Methyl-1,4-cyclooctandiol, 5-Ethyl-1,4-cyclooctandiol, 5-Propyl-1,4-cyclooctandiol, 5-Butyl-1,4-cyclooctandiol und 1,2-Benzoldimethanol.

Beispiele für organische Triole sind Glycerin und Trimethylolpropan.

Vorzugsweise werden aliphatische, araliphatische oder cycloaliphatische Diole mit Molekulargewichten von 62 g/mol bis 250 g/mol eingesetzt.

Geeignete Polyesterpolyole können in bekannter Weise durch Polykondensation von niedermolekularen Polycarbonsäurederivaten, wie beispielsweise Bernsteinsäure, Adipinsäure, Korksäure, Azelainsäure, Sebacinsäure, Dodekandisäure, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäure, Trimerfettsäure, Phthalsäure, Phthalsäureanhydrid, Isophthalsäure, Terephthalsäure, Zitronensäure

oder Trimellithsäure, mit niedermolekularen Polyolen, wie beispielsweise Ethylenglykol, Diethylenglykol, Neopentylglykol, Hexandiol, Butandiol, 1,4-Dihydroxycyclohexan, 1,4-Dimethylolcyclohexan, Propylenglykol, Glycerin, Trimethylolpropan, 1,4-Hydroxymethylcyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol, oder durch Ringöffnende Polymerisation cyclischer Carbonsäureester, wie ε-Caprolacton, hergestellt werden. Darüber hinaus lassen sich auch Hydroxycarbonsäurederivate, wie beispielsweise Milchsäure, Zimtsäure oder ω-Hydroxycapronsäure zu Polyesterpolyolen polykondensieren. Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigten Fettsäureenthaltenden Fettgemisches mit einem oder mehreren Alkoholen mit 1 bis 12 C-Atomen und durch anschließende partielle Umesterung der Triglycerid-Derivate zu Alkylesterpolyolen mit 1 bis 12 C-Atomen im Alkylrest hergestellt werden.

Geeignete Polyetherpolyole sind in an sich bekannter Weise durch Alkoxylierung von geeigneten Starter-Molekülen unter Basenkatalyse oder Einsatz von Doppelmetallcyanidverbindungen (DMC-Verbindungen) zugänglich. Die Polyetherpolyole sind gegebenenfalls blockweise aufgebaute Polyadditionsprodukte cyclischer Ether an OH- oder NH-funktionelle Startermoleküle. Geeignete cyclische Ether sind beispielsweise Styroloxide, Ethylenoxid, Propylenoxid, Tetrahydrofuran, Butylenoxid, Epichlorhydrin, sowie deren beliebige Mischungen. Als Startermoleküle können die oben im Rahmen der Diskussion der Polyesterpolyole genannten mehrwertigen Alkohole einer OH-Funktionalität $\geq 2$ sowie primäre oder sekundäre Amine und Aminoalkohole verwendet werden. Geeignete und bevorzugte Polyetherpolyole sind Di-, Tri-, Tetraethylenglykol, und Di-, Tri-, Tetrapropylenglykol.

Geeignete Polycarbonatpolyole sind in an sich bekannter Weise durch Umsetzung von organischen Carbonaten oder Phosgen mit Diolen oder Diol-Mischungen zugänglich. Hierfür geeignete organische Carbonate sind beispielsweise Dimethyl-, Diethyl- und Diphenylcarbonat. Geeignete mehrwertige Alkohole umfassen die oben im Rahmen der Diskussion der Polyesterpolyole genannten mehrwertigen Alkoholen einer OH-Funktionalität $\geq 2$. Bevorzugt können 1,4-Butandiol, 1,6-Hexandiol und / oder 3-Methylpentandiol eingesetzt werden. Polyesterpolyole können auch zu Polycarbonatpolyolen umgearbeitet werden. Besonders bevorzugt werden bei der Umsetzung der genannten Alkohole zu Polycarbonatpolyolen Dimethyl- oder Diethylcarbonat eingesetzt.

Geeignete Polyacrylatpolyole sind in der Regel Copolymerisate und weisen vorzugsweise massenmittlere Molekulargewichte Mw zwischen 1.000 und 10.000 Dalton auf. Die Herstellung geeigneter Polyacrylatpolyole ist dem Fachmann bekannt. Sie werden durch radikalische Polymerisation von Hydroxylgruppen aufweisenden, olefinisch ungesättigten Monomeren oder durch radikalische Copolymerisation von Hydroxylgruppen aufweisenden, olefinisch ungesättigten Monomeren mit gegebenenfalls anderen olefinisch ungesättigten Monomeren, wie z.B. Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethyl-hexylacrylat, 3,3,5-Trimethylhexylmethacrylat, Stearylacrylat, Stearylmethacrylat, Laurylacrylat oder Laurylmethacrylat, Cycloalkylacrylate und/oder Cycloalkylmethacrylate, wie Cyclo-pentylacrylat, Cyclopentylmethacrylat, Isobornylacrylat, Isobornylmethacrylat oder insbesondere Cyclohexylacrylat und/oder Cyclohexylmethacrylat. erhalten. Geeignete Hydroxylgruppen aufweisende, olefinisch ungesättigte Monomere sind insbesondere 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat sowie insbesondere 4-Hydroxybutylacrylat und/oder 4-Hydroxybutylmethacrylat. Als weitere Monomerbausteine für die Polyacrylatpolyole können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie in untergeordneten Mengen insbesondere Acryl- und/oder Methacrylsäure eingesetzt werden.

Geeignete Polyurethanpolyole sind beispielsweise Hydroxy-terminierte Prepolymere, die aus den oben beschrieben Diisocyanaten und Diolen aufgebaut sind. Neben Urethangruppen können die Polyurethanpolyole auch Harnstoff-, Carbodiimid-, Acylharnstoff-, Isocyanurat-, Allophanat-, Biuret-, Oxadiazintrion-, Uretdion-, Iminooxadiazindionstrukturen enthalten. Herstellbar sind die Polyurethanpolyole durch Umsetzung von Diisocyanate mit von Diolen nach dem Fachmann bekannten Herstellungsverfahren.

Beispiele für Polyamine sind Ethylendiamin, 1,2-Diaminopropan, 1,4-Diaminobutan, 2-Methylpentamethylendiamin, 1,6-Diaminohexan, 2,2,4- bzw. 2,4,4-Trimethylhexamethylendiamin, 1,2-Diaminocyclohexan, 1-Amino-3,3,5-trimethyl-5-aminomethylcyclohexan (Isophorondiamin, IPDA), 4,4'-Diaminodicyclohexyl-methan, Polyasparaginsäureester, wie sie beispielsweise nach dem Verfahren der EP-B 0 403 921 durch Umsetzung von Diaminen mit Fumarsäure- bzw. Maleinsäureestern erhältlich sind oder auch Polyetherpolyamine mit aliphatisch gebundenen primären Aminogruppen.

Die Umsetzung der Aufbaukomponenten I), II), gegebenenfalls III) und / oder gegebenenfalls IV) zur Erzeugung des erfindungsgemäßen Polyurethanpolymers kann in Gegenwart von einem oder mehreren Katalysatoren stattfinden.

Geeignete Katalysatoren sind die nach dem Stand der Technik bekannten und üblichen tertiären Amine, wie z. B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche, sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- und / oder Zinnverbindungen.

Der Katalysator wird in Mengen von 0,001 bis 2,0 Gew.-%, bevorzugt von 0,005 bis 1,0 Gew.-% besonders bevorzugt von 0,01 bis 0,1 Gew.-% bezogen auf die Diisocyanatkomponente eingesetzt. Der Katalysator kann in Substanz eingesetzt werden oder gelöst in der Diol-Komponente. Ein Vorteil ist hierbei, dass die dann erhaltenen thermoplastischen Polyurethane keine Verunreinigungen durch gegebenenfalls mitverwendete Lösungsmittel für den Katalysator enthalten. Die Zugabe des Katalysators kann dabei in einer oder mehreren Portionen oder auch kontinuierlich, z. B. mit Hilfe einer geeigneten Dosierpumpe, über die gesamte Dauer der Umsetzung erfolgen.

Alternativ können aber auch Mischungen des bzw. der Katalysatoren mit einem Katalysatorlösungsmittel, bevorzugt mit einem organischen Katalysatorlösungsmittel, eingesetzt werden. Der Verdünnungsgrad der Katalysatorlösungen kann dabei innerhalb eines sehr breiten Bereichs frei gewählt werden. Katalytisch wirksam sind Lösungen ab einer Konzentration von 0,001 Gew.-%.

Geeignete Lösungsmittel für den Katalysator sind beispielsweise gegenüber Isocyanatgruppen inerte Lösungsmittel wie z.B. Hexan, Toluol, Xylol, Chlorbenzol, Essigsäureethylester, Essigsäurebutylester, Diethylenglykoldimethylether, Dipropylenglykoldimethylether, Ethylenglykolmonomethyl- oder -ethyletheracetat, Diethylenglykolethyl- und -butyletheracetat, Propylenglykolmonomethyl-etheracetat, 1-Methoxypropyl-2-acetat, 3- Methoxy-n-butylacetat, Propylenglykoldiacetat, Aceton, Methylethylketon, Methylisobutylketon, Cyclohexanon, Lactone, wie β-Propiolacton, γ-Butyrolacton, ε-Caprolacton und ε -Methylcaprolacton, aber auch Lösungsmittel wie N-Methylpyrrolidon und N-Methylcaprolactam, 1,2-Propylencarbonat, Methylenchlorid, Dimethylsulfoxid, Triethylphosphat oder beliebige Gemische derartiger Lösungsmittel.

Es können aber auch Lösungsmittel für den Katalysator zum Einsatz kommen, die gegenüber Isocyanaten reaktive Gruppen tragen und in das Diisocyanat eingebaut werden können. Beispiele für solche Lösungsmittel sind ein- oder mehrwertige einfache Alkohole, wie z. B. Methanol, Ethanol, n-Propanol, Isopropanol, n-Butanol, n-Hexanol, 2-Ethyl-1-hexanol, Ethylenglykol, Propylenglykol, die isomeren Butandiole, 2-Ethyl-1,3-hexandiol oder Glycerin; Etheralkohole, wie z. B. 1-Methoxy-2-propanol, 3-Ethyl-3-hydroxymethyloxetan, Tetrahydrofurfurylalkohol, Ethylengylkolmonomethylether, Ethylenglykolmonoethylether, Ethylenglykolmonobutylether, Diethylenglykolmonomethylether, Diethylenglykolmonothylether, Diethylenglykolmonobutylether, Diethylenglykol, Dipropylenglykol oder auch flüssige höhermolekulare Polyethylenglykole, Polypropylenglykole, gemischte Polyethylen/polypropylenglykole sowie deren Monoalkylether; Esteralkohole, wie z. B. Ethylenglykolmonoacetat, Propylenglykolmonolaurat, Glycerinmono- und diacetat, Glycerinmonobutyrat oder 2,2,4-Trimethyl-1,3-pentandiol-monoisobutyrat; ungesättigte Alkohole wie z. B. Allylalkohol, 1,1-Dimethyl-allylalkohol oder Oleinalkohol; araliphatische Alkohole wie z. B. Benzylalkohol; N-monosubstituierte Amide, wie z. B. N-Methylformamid, N-Methylacetamid, Cyanacetamid oder 2-Pyrrolidinon oder beliebige Gemische derartiger Lösungsmittel.

In einer weiteren bevorzugten Ausführungsform ist das erfindungsgemäße thermoplastische Polyurethanpolymer erhältlich durch die Umsetzung von mindestens folgenden Aufbaukomponenten:

I) einem oder mehreren aliphatischen Diisocyanaten ausgewählt aus der Gruppe bestehend aus 1,4-Diisocyanatobutan, 1,5-Diisocyanatopentan, 1,6-Diisocyanatohexan, 2-Methyl-1,5-diisocyanatopentan und / oder Mischungen aus mindestens zwei hieraus,
II) einem oder mehreren aliphatischen Diolen ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol oder Mischungen aus mindestens zwei hieraus,
III) einem oder mehreren monomeren Diisocyanaten mit einem Molekulargewicht von 140 g/mol bis 400 g/mol,
IV) einem oder mehreren NCO-reaktiven Verbindungen ausgewählt aus der Gruppe bestehend aus aliphatischen Diolen, araliphatischen Diolen, cycloaliphatischen Diolen, organischen Triolen, Polyesterpolyolen, Polyetherpolyolen, Polycarbonatpolyolen, Poly(meth)acrylatpolyolen, Polyurethanpolyolen, Polyaminen und / oder Mischungen aus mindestens zwei hieraus,

wobei die zur Erzeugung des thermoplastischen Polyurethanpolymers eingesetzten Aufbaukomponenten zu 95 Gew.-% bis 99,9 Gew.-% aus einem oder mehreren aliphatischen Diisocyanaten I) und einem oder mehreren aliphatischen Diolen II) und zu 0,1 Gew.-% bis 5 Gew.-% aus einem oder mehreren Diisocyanaten III) und / oder einer oder mehreren NCO-reaktive Verbindungen IV), bezogen auf die Gesamtmasse der eingesetzten Aufbaukomponenten, bestehen, wobei die Diisocyanat-Komponenten I) und gegebenenfalls III) mit den NCO-reaktiven-Komponenten II) und gegebenenfalls IV) in einem molaren Verhältnis von Diisocyanat-Komponente : NCO-reaktiver-Komponente im Bereich von 1,0 : 0,95 bis 0,95 : 1,0 eingesetzt werden, dadurch gekennzeichnet, dass das Verhältnis $\overline{M_z}/\overline{M_w}$ des thermoplastischen Polyurethanpolymers in einem Bereich von 2,3 bis 6 liegt, wobei $\overline{M}_z$ das Zentrifugenmittel der Molmasse und $\overline{M}_w$ das Massenmittel der Molmasse ist, jeweils bestimmt durch Gelpermeationschromatographie in Hexafluoroisopropanol gegen Polymethylmethacrylat als Standard.

In einer weiteren bevorzugten Ausführungsform ist das erfindungsgemäße thermoplastische Polyurethanpolymer erhältlich durch die Umsetzung von mindestens folgenden Aufbaukomponenten:

I) 1,6-Diisocyanatohexan und
II) 1,4-Butandiol,
III) einem oder mehreren monomeren Diisocyanaten mit einem Molekulargewicht von 140 g/mol bis 400 g/mol,
IV) einem oder mehreren NCO-reaktiven Verbindungen ausgewählt aus der Gruppe bestehend aus aliphatischen, araliphatischen oder cycloaliphatischen Diolen mit Molekulargewichten von 62 g/mol bis 250 g/mol und / oder Mischungen aus mindestens zwei hieraus,

wobei die zur Erzeugung des thermoplastischen Polyurethanpolymers eingesetzten Aufbaukomponenten zu 95 Gew.-% bis 99,9 Gew.-% aus 1,6-Diisocyanatohexan I) und 1,4-Butandiol II) und zu 0,1 Gew.-% bis 5 Gew.-% aus einem oder mehreren Diisocyanaten III) und / oder einer oder mehreren NCO-reaktive Verbindungen IV), bezogen auf die Gesamtmasse der eingesetzten Aufbaukomponenten, bestehen, wobei die Diisocyanat-Komponenten I) und gegebenenfalls III) mit den NCO-reaktiven-Komponenten II) und gegebenenfalls IV) in einem molaren Verhältnis von Diisocyanat-Komponente : NCO-reaktiver-Komponente im Bereich von 1,0 : 0,95 bis 0,95 : 1,0 eingesetzt werden, dadurch gekennzeichnet, dass das Verhältnis $\overline{M}_z/\overline{M}_w$ des thermoplastischen Polyurethanpolymers in einem Bereich von 2,3 bis 6 liegt, wobei $\overline{M}_z$ das Zentrifugenmittel der Molmasse und $\overline{M}_w$ das Massenmittel der Molmasse ist, jeweils bestimmt durch Gelpermeationschromatographie in Hexafluoroisopropanol gegen Polymethylmethacrylat als Standard.

In einer bevorzugten Ausführungsform weist das erfindungsgemäße thermoplastische Polyurethanpolymer einen Urethangruppengehalt von 40 Gew.-% bis 60 Gew.-%, vorzugsweise von 40 Gew.-% bis 52 Gew.-% auf, bezogen auf das Gesamtgewicht des thermoplastischen Polyurethanpolymers auf. In einer besonders bevorzugten Ausführungsform weist das erfindungsgemäße thermoplastische Polyurethanpolymer einen Urethangruppengehalt von 44 Gew.-% bis 48 Gew.-%, noch bevorzugter von 44 Gew.-% bis 46 Gew.-% auf, bezogen auf das Gesamtgewicht des thermoplastischen Polyurethanpolymers auf.

Der Urethangruppengehalt wird bestimmt indem die Masse der (theoretischen) linearen Repetiereinheit wird durch die Masse der Urethanstruktureinheit geteilt wird. Hierbei wird jede Isocyanatgruppe (-NCO) mit einer Alkoholgruppe (-OH) umgesetzt. Der resultierende Wert wird mit 100 multipliziert um einen Wert in % zu erhalten.

Beispielberechnung :

| | | Masse in g/mol |
|---|---|---|
| Diisocyanat | 1,5-Pentamethylendiisocyanat | 154,17 |
| Diol | 1,4-Butandiol | 90,12 |
| Repetiereinheit | | 244,29 |
| Urethangruppe | | 59,02 |

Anzahl der theoretisch vorhandenen Urethangruppen = 2
Resultierende Urethangruppendichte = 48,32
In einer bevorzugten Ausführungsform weist das erfindungsgemäße thermoplastische Polyurethanpolymer ein mittels Elementaranalyse bestimmtes Gewichtsprozent-Verhältnis von O zu N von ≥ 1,5:1 bis ≤ 2,6:1 und ein mittels Elementaranalyse bestimmtes Gewichtsverhältnis N zu C von ≥ 1:10 bis ≤ 1:3 auf.

In einer weiteren bevorzugten Ausführungsform ist das erfindungsgemäße thermoplastische Polyurethanpolymer ein semikristallines thermoplastisches Polyurethanpolymer.

In einer weiteren bevorzugten Ausführungsform weist das erfindungsgemäße thermoplastische Polyurethanpolymer einen Glasübergangspunkt von < 50 °C, vorzugsweise im Bereich zwischen ≥ 0° C und < 50 °C auf, bestimmt mittels Differential Scanning Calorimetry gemäß DIN EN 61006 (November 2004) .

In einer weiteren bevorzugten Ausführungsform weist das erfindungsgemäße thermoplastische Polyurethanpolymer einen Schmelzpunkt von > 150 °C, weiter bevorzugt zwischen 150 °C und 200°C auf, bestimmt mittels Differential Scanning Calorimetry gemäß DIN EN 61006 (November 2004).

In einer weiteren bevorzugten Ausführungsform liegen bei dem erfindungsgemäßen thermoplastischen Polyurethanpolymer zwischen dem Glasübergangspunkt, bestimmt mittels Differential Scanning Calorimetry gemäß DIN EN 61006 (November 2004), und dem Schmelzpunkt, bestimmt mittels Differential Scanning Calorimetry gemäß DIN EN 61006 (November 2004), des thermoplastischen Polyurethans mindestens 100 °C.

Die Herstellung des thermoplastischen Polyurethanpolymers kann beispielsweise in einem mehrstufigen Verfahren erfolgen, wobei in mindestens einer Stufe mindestens ein Prepolymer, vorzugsweise ein Hydroxy-terminiertes Prepolymer, aus mindestens einem aliphatischen Diisocyanat I) mit einem Molekulargewicht von 140 g/mol bis 170 g/mol und mindestens einem aliphatischen Diol II) mit einem Molekulargewicht von 62 g/mol bis 120 g/mol gebildet wird. Als weitere Aufbaukomponenten können ein oder mehrere Polyisocyanate III) und / oder ein oder mehrere NCO-reaktive Verbindungen IV) eingesetzt werden. Die Komponenten III) und IV) können dabei in die Prepolymere eingebaut werden, nur aus ihnen Prepolymere erzeugt werden und / oder zur Verknüpfung der Prepolymere verwendet werden. Die Komponenten I), II), gegebenenfalls III) und gegebenenfalls IV) werden jeweils unabhängig voneinander ausgewählt. Die Isocyanat-Komponenten I) und gegebenenfalls III) werden mit den Isocyanatreaktiven-Komponenten II) und gegebenenfalls IV) in einem molaren Verhältnis von Isocyanat-Komponente : Isocyanatreaktiver-Komponente im Bereich von 1,0 : 0,95 bis 0,95 : 1,0 eingesetzt.

Im Rahmen der vorliegenden Erfindung wird unter einem "Hydroxy-terminierten Prepolymer" ein Prepolymergemisch verstanden, in dem mindestens 90 Anzahl-% der Molekülenden eine Hydroxygruppe aufweisen und die verbleibenden 10 Anzahl-% Molekülenden weitere HydroxyGruppen, NCO-Gruppen oder nicht-reaktive Gruppen aufweisen. Unter einer "nicht-reaktiven Gruppe" wird im Rahmen der vorliegenden Erfindung eine Gruppe verstanden, die unter den erfindungsgemäßen Reaktionsbedingungen weder mit NCO-Gruppen, noch mit OH-Gruppen in einer Zeiteinheit reagiert, die der erfindungsgemäßen Reaktionszeit entspricht. Eine nicht-reaktive Gruppe kann beispielsweise aus einer reaktiven NCO-Gruppe oder OH-Gruppe durch Reaktion mit geeigneten Reaktionspartnern (Kettenabbrecher) in eine nicht-reaktive Gruppe umgewandelt werden. Als Kettenabbrecher eignen sich alle monofunktionellen Verbindungen, die unter den erfindungsgemäßen Reaktionsbedingungen entweder mit einer Isocyanatgruppe oder mit einer Hydroxygruppe reagieren, beispielsweise Mono-Alkohole, wie Methanol, Mono-Amine, wie Diethylamin und Monoisocyanate, wie Butylisocyanat. Das Hydroxy-terminierte Prepolymer kann beispielsweise an einem Molekülende eine Hydroxygruppe aufweisen und an dem oder den anderen Molekülenden beispielsweise eine Alkylgruppe. Wenn im Rahmen der vorliegenden Erfindung von einem Hydroxy-terminierten Prepolymer gesprochen wird, ist hiermit auch immer ein Gemisch aus dem mindestens einen Hydroxy-terminierten Prepolymer und einem nicht-reaktiv terminierten Prepolymer umfasst. Ferner kann es sich aufgrund der Statistik der Reaktion abgesehen von Nebenreaktionen auch um ein Gemisch von nicht Hydroxy-terminierten bis zu zweifach Hydroxy-terminierten Prepolymeren handeln. Vorzugsweise handelt es sich überwiegend um ein Gemisch von zweifach Hydroxy-terminierten Prepolymeren. Erfindungsgemäß kann es sich bei dem mindestens einen Hydroxy-terminierten Prepolymer auch um ein Gemisch von mindestens einem Hydroxy-terminierten Prepolymer und mindestens einem nicht-reaktiv terminierten Prepolymer handeln.

Das mindestens eine Hydroxy-terminierte Prepolymer kann beispielsweise aus der Gesamtmenge der aliphatischen Diole II) und einer ersten Teilmenge der aliphatischen Diisocyanate I) gebildet werden. In einem oder mehreren darauffolgenden Schritten können dann weitere Teilmengen der aliphatischen Diisocyanate I), d.h. eine zweite, dritte etc. Teilmenge hinzugefügt werden, um weitere erfindungsgemäße, im Mittel höher molekulare, Hydroxy-terminierte Prepolymere aufzubauen. Alternativ kann das mindestens eine Hydroxy-terminierte Prepolymer beispielsweise aus einer ersten Teilmenge der aliphatischen Diole II) und einer ersten Teilmenge der aliphatischen Diisocyanate I) gebildet werden. In einer oder mehreren darauffolgenden Verfahrensstufen können dann weitere Teilmengen der aliphatischen Diole II) und der aliphatischen Diisocyanate I) zugeführt werden, um weitere im Mittel höher molekulare Hydroxy-terminierte Prepolymere aufzubauen.

Die Umsetzung kann mit oder ohne Katalysator durchgeführt werden, allerdings ist eine katalysierte Umsetzung bevorzugt. Als Katalysatoren eigenen sich die oben aufgeführten Katalysatoren. Die Umsetzung kann Lösungsmittelfrei oder in Lösung erfolgen. In Lösung bedeutet, dass zumindest einer der Reaktionspartner in einem Lösungsmittel gelöst ist, bevor er zu dem anderen Reaktionspartner gegeben wird. Vorzugsweise wird die Umsetzung Lösungsmittelfrei durchgeführt. Dabei ist das Verfahren im Sinne der vorliegenden Erfindung noch als lösungsmittelfrei anzusehen, wenn der Gehalt des Lösungsmittels bis 1 Gew.-%, vorzugsweise bis 0,1 Gew.-%, noch bevorzugter bis 0,01 Gew.-% bezogen auf das Gesamtgewicht der Reaktionsmischung beträgt.

Die Temperaturen zur Bildung des mindestens einen Prepolymers, vorzugsweise Hydroxy-terminierten Prepolymers, durch das erfindungsgemäße Verfahren können in Abhängigkeit von den eingesetzten Verbindungen ausgewählt werden. Bevorzugt ist hierbei jedoch, wenn die Umsetzung bei Temperaturen von $\geq$ 40 °C bis $\leq$ 260 °C, vorzugsweise von $\geq$ 60 °C bis $\leq$ 250 °C, bevorzugter von $\geq$ 100 °C bis $\leq$ 240 °C, besonders bevorzugt von $\geq$ 120 °C bis $\leq$ 220 °C durchgeführt wird. Dabei wird toleriert, dass das Produkt bei der Umsetzung kurzfristige (< 60 Sekunden) Abweichungen der Reaktionstemperatur von den oben genannten Bereichen erfährt.

Das so erzeugte mindestens eine Prepolymer, vorzugsweise Hydroxy-terminierte Prepolymer, kann beispielsweise in mindestens einer weiteren Verfahrensstufe mit mindestens einem Kettenverlängerer zum thermoplastischen

Polyurethanpolymer umgesetzt werden. Dabei können entweder die Gesamtmengen der beiden Komponenten, d.h. des erzeugten mindestens einen Prepolymers, vorzugsweise Hydroxy-terminierten Prepolymers, und des mindestens einen Kettenverlängerers, miteinander in einer Verfahrensstufe umgesetzt werden oder es wird eine Teilmenge der einen Komponenten mit der Gesamtmenge oder einer Teilmenge der anderen Komponente in mehreren Verfahrensstufen umgesetzt. Als Kettenverlängerer können alle oben genannten Polyisocyanate eingesetzt werden. Vorzugsweise werden ein oder mehrere aliphatische Diisocyanate mit einem Molekulargewicht von 140 g/mol bis 170 g/mol als Kettenverlängerer eingesetzt.

Soll das erfindungsgemäße thermoplastische Polyurethanpolymer beispielsweise aromatische Gruppen aufweisen, so können diese beispielsweise durch die Verwendung von aromatischen Diisocyanaten als Kettenverlängerer eingeführt werden. Auch ist es beispielsweise möglich, aromatische Prepolymere zu erzeugen und diese mit den aliphatischen Prepolymeren zu mischen um erfindungsgemäße Polyurethanpolymere mit aromatischen Gruppen aufzubauen.

Die Umsetzung der Komponenten I), II), gegebenenfalls III) und gegebenenfalls IV) kann mit oder ohne Katalysator durchgeführt werden, allerdings ist eine katalysierte Umsetzung weniger bevorzugt. Als Katalysatoren eigenen sich die oben aufgeführten Katalysatoren. Die Umsetzung kann Lösungsmittelfrei oder in Lösung erfolgen. In Lösung bedeutet, dass zumindest einer der Reaktionspartner in einem Lösungsmittel gelöst ist, bevor er zu dem anderen Reaktionspartner gegeben wird. Vorzugsweise wird die Umsetzung Lösungsmittelfrei durchgeführt. Dabei ist das Verfahren im Sinne der vorliegenden Erfindung noch als lösungsmittelfrei anzusehen, wenn der Gehalt des Lösungsmittels bis 1 Gew.-%, vorzugsweise bis 0,1 Gew.-%, noch bevorzugter bis 0,01 Gew.-% bezogen auf das Gesamtgewicht der Reaktionsmischung beträgt.

Die Temperaturen zur Bildung des erfindungsgemäßen thermoplastischen Polyurethanpolymers durch Umsetzung des mindestens einen Prepolymers, vorzugsweise Hydroxy-terminierten Prepolymers, mit dem mindestens einen Kettenverlängerer im erfindungsgemäßen Verfahren können in Abhängigkeit von den eingesetzten Verbindungen ausgewählt werden. Bevorzugt ist hierbei jedoch, wenn die Umsetzung bei Temperaturen von ≥ 60 °C bis ≤ 260 °C, vorzugsweise von ≥ 80 °C bis ≤ 250 °C, besonders bevorzugt von ≥ 100 °C bis ≤ 245 °C und ganz besonders bevorzugt von ≥ 120 °C bis ≤ 240 °C durchgeführt wird. Dabei wird toleriert, dass das Produkt bei der Umsetzung kurzfristige (< 60 Sekunden) Abweichungen der Reaktionstemperatur von den oben genannten Bereichen erfährt.

Neigt das mindestens eine Prepolymer, vorzugsweise Hydroxy-terminierte Prepolymer, bzw. das thermoplastische Polyurethanpolymer zur Kristallisation und besitzt es einen Schmelzpunkt, so wird die Reaktion bevorzugt in einem Temperaturbereich von 30 K unterhalb bis 150 K oberhalb des Schmelzpunktes, bevorzugt von 15 K unterhalb bis 100 K oberhalb, besonders bevorzugt von 10 K unterhalb bis 70 K oberhalb des Schmelzpunktes des mindestens einen Prepolymers, vorzugsweise Hydroxy-terminierten Prepolymers, bzw. des thermoplastischen Polyurethans durchgeführt.

Die Verfahrensstufen zur Erzeugung des erfindungsgemäßen thermoplastischen Polyurethanpolymers kann in einem einzelnen Apparat oder in einer Vielzahl von Apparaten durchgeführt werden. Beispielsweise kann die Erzeugung des Prepolymers, vorzugsweise Hydroxy-terminierten Prepolymers, zunächst in einem ersten Apparat (z.B. Loop-Reaktor oder kühlbarer Mischer) durchgeführt werden und dann das Reaktionsgemisch in einen weiteren Apparat (z.B. Extruder oder andere Hochviskosreaktoren) überführt werden, um das erfindungsgemäße thermoplastische Polyurethanpolymer zu erzeugen.

In einer bevorzugten Ausführungsform werden das mindestens eine aliphatische Diol II) und das mindestens eine aliphatische Diisocyanat I) in mindestens einem Statikmischer, Dynamikmischer oder Mischer-Wärmeübertrager zum mindestens einen Hydroxy-terminierten Prepolymer umgesetzt.

In einer weiteren bevorzugten Ausführungsform werden das mindestens eine aliphatische Diol II) und das mindestens eine aliphatische Diisocyanat I) in einem Loop-Reaktor (auch Schleifenreaktor genannt) zum mindestens einen Hydroxy-terminierten Prepolymer umgesetzt.

Zur Umsetzung des mindestens einen Prepolymers, vorzugsweise Hydroxy-terminierten Prepolymers, mit dem mindestens einen Kettenverlängerer zum thermoplastischen Polyurethanpolymer ist es erforderlich, das erfindungsgemäße Verfahren auf den exponentiellen Viskositätsanstieg in dieser Phase abzustimmen. Dies wird erreicht indem bevorzugt Apparate eingesetzt werden, in denen das Reaktionsprodukt mit mechanischer Energie aktiv bewegt wird. Besonders bevorzugt werden Apparate eingesetzt, bei denen sich die Werkstoffoberflächen gegenseitig - bis auf Spiele - abreinigen. Solche Apparate sind beispielsweise gleichlaufende Mehrwellenextruder wie Doppel- oder Vierwellenextruder oder Ringextruder, gegenläufige Mehrwellenextruder, Ko-Kneter oder Planetwalzenextruder und Rotor-Stator Systeme. Weitere geeignete Apparate sind ein- oder zweiwellige großvolumige Kneter. Die zweiwelligen großvolumigen Kneter können gleich- oder gegenläufige sein. Beispiele für großvolumige Kneter sind beispielsweise CRP (Fa. List Technology AG), Reacom (Buss-SMS-Canzler GmbH), Reasil (Buss-SMS-Canzler GmbH), KRC kneader (Kurimoto, Ltd). In einer bevorzugten Ausführungsform wird mindestens ein solcher Apparat mit mindestens einem Statikmischer, Dynamikmischer, Loop-Reaktor oder Mischer-Wärmeübertrager kombiniert, wobei in dem Statikmischer, Dynamikmischer, Loop-Reaktor oder Mischer-Wärmeübertrager aus dem mindestens einen aliphatisch Diol II) und dem mindestens

einen aliphatischen Diisocyanat I) das mindestens eine Prepolymer, vorzugsweise Hydroxy-terminierten Prepolymer, erzeugt wird. Neigt eine der Komponenten der Reaktionsmischung zur Kristallisation, so wird die Temperatur der Mischung durch geeignete Maßnahmen in einem Temperaturbereich von 30 K unterhalb bis 150 K oberhalb des Schmelzpunktes, bevorzugt von 15 K unterhalb bis 100 K oberhalb, besonders bevorzugt von 10 K unterhalb bis 70 K oberhalb des Schmelzpunktes der bei der höchsten Temperatur schmelzenden Komponente beziehungsweise des bei der höchsten Temperatur schmelzenden Reaktionsproduktes der Komponenten gehalten. Dabei ist die Verweilzeit im Statikmischer, Dynamikmischer, Loop-Reaktor oder Mischer-Wärmeübertrager bevorzugt so kurz, dass der Viskositätsanstieg (bedingt durch die Polyadditions-Reaktion der reaktiven Komponenten miteinander) nicht zu einer Verstopfung des Statikmischers, Dynamikmischers, Loop-Reaktors oder Mischer-Wärmeübertragers führt oder ein Druckaufbau auf < 50 bar, bevorzugt < 30 bar, besonders bevorzugt < 20 bar und ganz besonders bevorzugt < 10 bar begrenzt wird, und das entstehende Gemisch einem Apparat zugeführt wird, der der obigen Liste entspricht.

In einer weiteren bevorzugten Ausführungsform findet die Umsetzung des mindestens einen Prepolymers, vorzugsweise Hydroxy-terminierten Prepolymers, mit dem mindestens einen Kettenverlängerer in einem Extruder statt.

In einer weiteren bevorzugten Ausführungsform findet die Herstellung des erfindungsgemäßen thermoplastischen Polyurethanpolymers in einer Kombination eines Loop-Reaktors mit einem Extruder statt.

In einer weiteren bevorzugten Ausführungsform findet die Herstellung des erfindungsgemäßen thermoplastischen Polyurethanpolymers in einer Kombination eines Statikmischers, Dynamikmischers, Loop-Reaktors oder Mischer-Wärmeübertragers mit einem beheizten Transportband statt.

Im Anschluss an die Umsetzung zum thermoplastischen Polyurethanpolymer wird dieses in eine Handelsform gebracht, typischerweise Granulat. Nach der Umsetzung in der finalen Verfahrensstufe liegt das thermoplastische Polyurethanpolymer im schmelzeflüssigen Zustand vor, wird im Schmelzezustand zerkleinert und durch Abkühlung zum Erstarren gebracht oder zuerst durch Abkühlen zum Erstarren gebracht und anschließend zerkleinert. Dies kann beispielsweise mit den dem Fachmann bekannten Methoden der Stranggranulierung, der Unterwasser-Stranggranulierung, der Wasserringgranulierung und der Unterwassergranulierung geschehen. Die Abkühlung erfolgt bevorzugt mit Wasser; auch eine Abkühlung mit Luft oder anderen Medien ist möglich.

Nach Umsetzung auf einem Bandreaktor kann das erfindungsgemäße thermoplastische Polyurethanpolymer auch abgekühlt, gebrochen und gemahlen werden.

Das so erhaltene erfindungsgemäße thermoplastische Polyurethanpolymer kann erfindungsgemäß in einem Feststoffmischprozess gemischt und in einem weiteren Extruder aufgeschmolzen und wieder granuliert werden. Dies ist vor allem dann bevorzugt, wenn erfindungsgemäße thermoplastische Polyurethanpolymer nach dem Bandreaktor gekühlt und gemahlen wird, weil dieser Vorgang auch die Produktform homogenisiert.

Das erfindungsgemäße Herstellungsverfahren kann kontinuierlich oder diskontinuierlich, d.h. als Batch-Verfahren oder Semi-Batch-Verfahren durchgeführt werden.

Als Kettenverlängerer können abhängig vom gebildeten Prepolymer organische Diole, Diamine und Polyisocyanate eingesetzt werden. Im Fall von NCO-terminierten Prepolymeren eignen sich beispielsweise organische Diole und Diamine mit jeweils einem Molekulargewicht von 60 g/mol bis 120 g/mol. Bevorzugt sind als Kettenverlängerer aliphatische Diole mit einem Molekulargewicht von 62 g/mol bis 120 g/mol, wie beispielsweise 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,2-Ethandiamin und 1,3-Propandiamin. Zur Herstellung des thermoplastischen Polyurethanpolymers wird bevorzugt 1,4-Butandiol als Kettenverlängerer eingesetzt. Im Fall von Hydroxy-terminierten Prepolymeren eigenen sich beispielsweise Polyisocyanate mit einem Molekulargewicht von 140 g/mol bis 170 g/mol, vorzugsweise aliphatischen Diisocyanate mit einem Molekulargewicht von 140 g/mol bis 170 g/mol wie beispielsweise 1,4-Diisocyanatobutan, 1,5-Diisocyanatopentan, 1,6-Diisocyanatohexan und 2-Methyl-1,5-diisocyanatopentan. In einer bevorzugten Ausführungsform des zur Herstellung des thermoplastischen Polyurethanpolymers wird 1,6-Diisocyanatohexan und / oder 1,5-Diisocyanatopentan als Kettenverlängerer eingesetzt.

## Komponente B

Die Zusammensetzung enthält als Komponente B ein sterisch gehindertes Phenol. Auch Mischungen mehrerer solcher Komponenten können eingesetzt werden. Die Komponente B wirkt als Langzeitthermostabilisator.

Bevorzugt handelt es sich dabei um eine Verbindung der allgemeinen Struktur (1a) oder (1b)

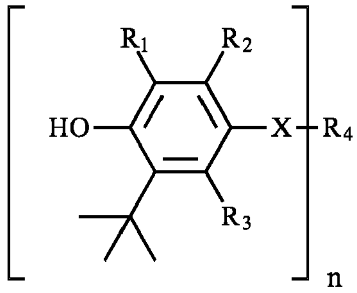

(1a)

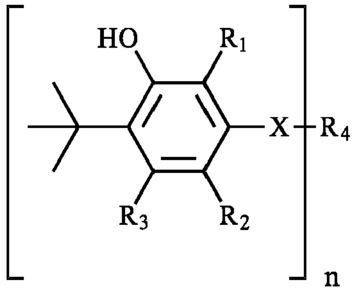

(1b)

wobei n 1, 2, 3 oder 4 bedeutet,
$R_1$, $R_2$ und $R_3$ jeweils unabhängig voneinander für $C_1$- bis $C_4$-Alkyl oder Wasserstoff stehen
X für eine direkte Bindung oder einen organischen Rest mit $C_1$- bis $C_{60}$- steht und der organische Rest Sauerstoff und/oder Schwefel und/oder Stickstoff enthalten kann.
$R_4$ für eine direkte Bindung, Kohlenstoff, $C_1$-$C_8$ Alkyl, Aryl oder eine Struktur gemäß Formel (2a) (2b) oder (2c) steht.

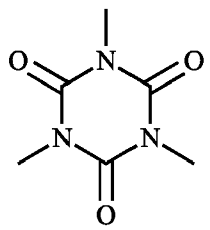

(2a)

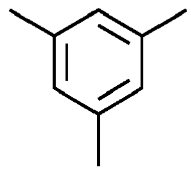

(2b)

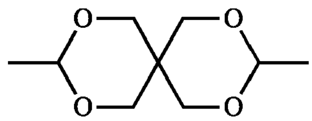

(2c)

Besonders bevorzugt ist die Komponente B ausgewählt aus mindestens einer Verbindung gemäß den Strukturen (3), (4), (5) und (6).

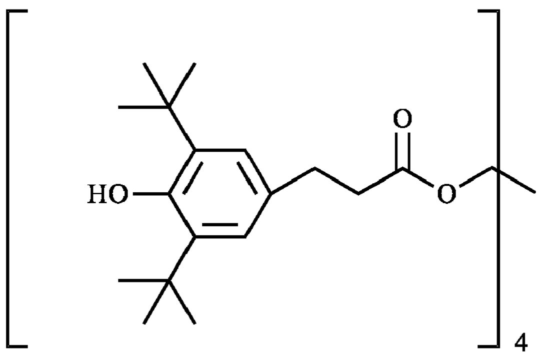

(3)

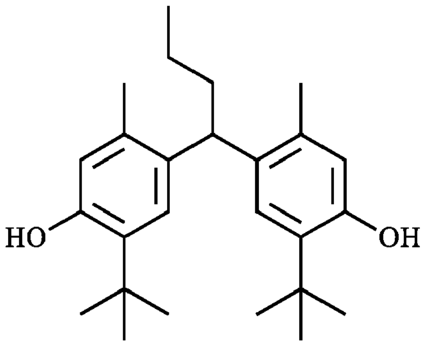

(4)

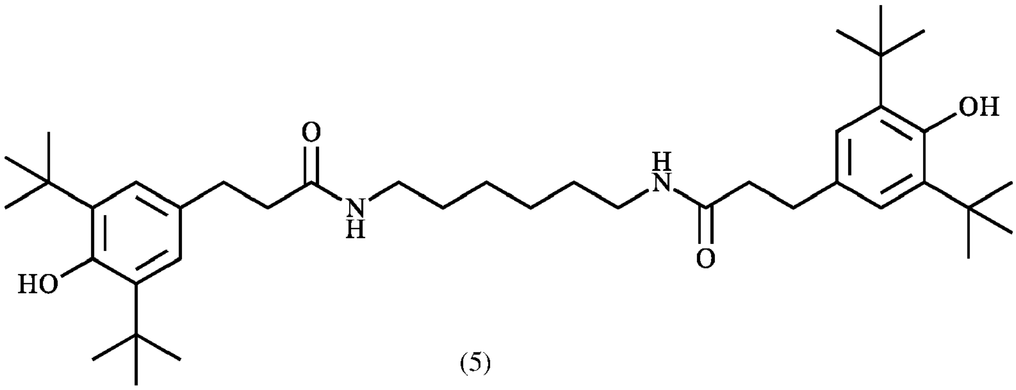

(5)

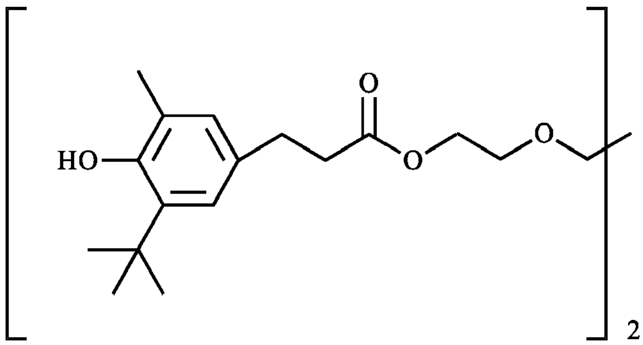

(6)

Die Verbindung (3) ist als CAS: 6683-19-8 klassifiziert und kommerziell unter dem Namen ADK Stab™ AO-60 der Firma Adeka (Japan) verfügbar

Die Verbindung (4) ist als CAS: 85-60-9 klassifiziert und kommerziell unter dem Namen. Songnox™ 4425 der Firma Songwon Industrial Group (Südkorea) verfügbar.

Die Verbindung (5) ist als CAS: 23128-74 klassifiziert und kommerziell unter dem Namen. Songnox™ 1098 der Firma Songwon Industrial Group (Südorea) verfügbar.

Die Verbindung (6) ist als CAS: 36443-68-2 klassifiziert und kommerziell unter dem Namen Irganox™ 245 der Firma BASF (Deutschland) verfügbar.

Noch weiter bevorzugt wird als Komponente B die Verbindung gemäß Struktur (5) oder Struktur (6) eingesetzt. Durch diese Verbindungen wird eine besonders geringe Änderung der Zugfestigkeit nach Thermolagerung erreicht. Am meisten bevorzugt ist die Struktur (6).

Weitere geeignete Verbindungen sind die Verbindungen gemäß den Strukturen (7) bis (12).

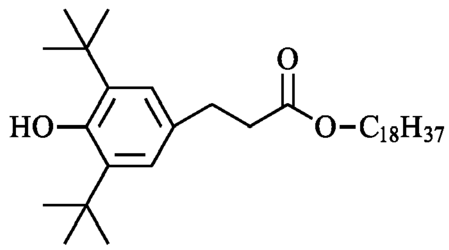

(7)

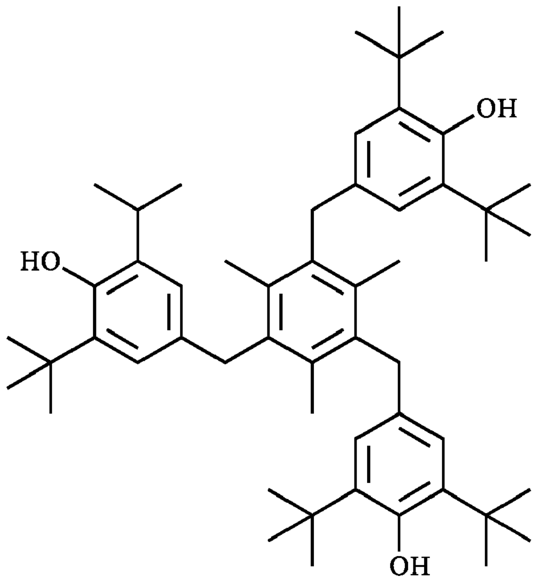

(8)

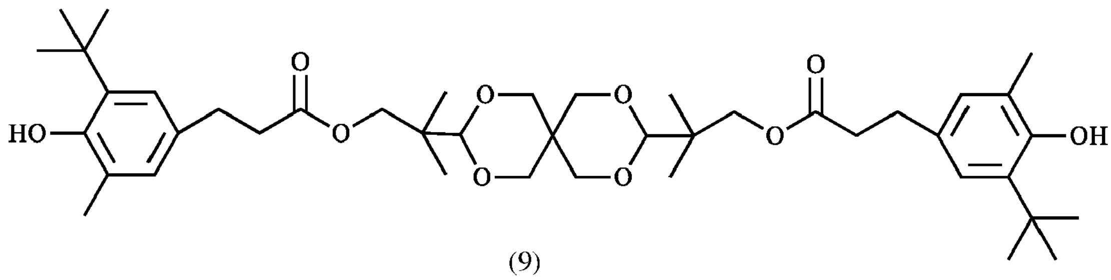

(9)

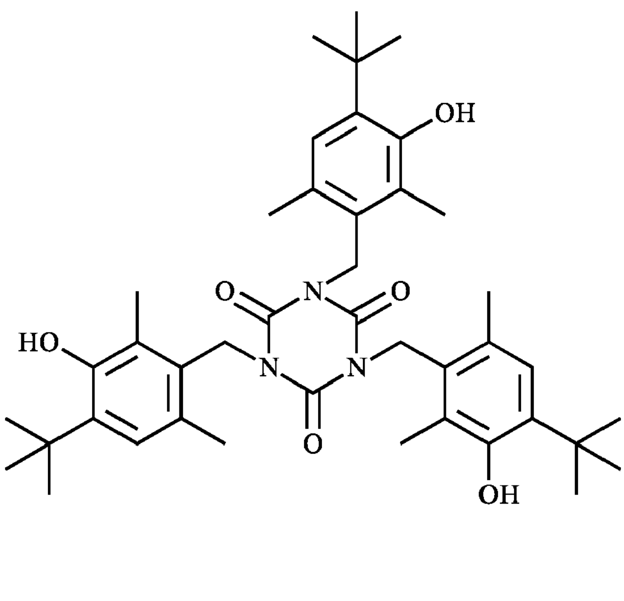

(10)

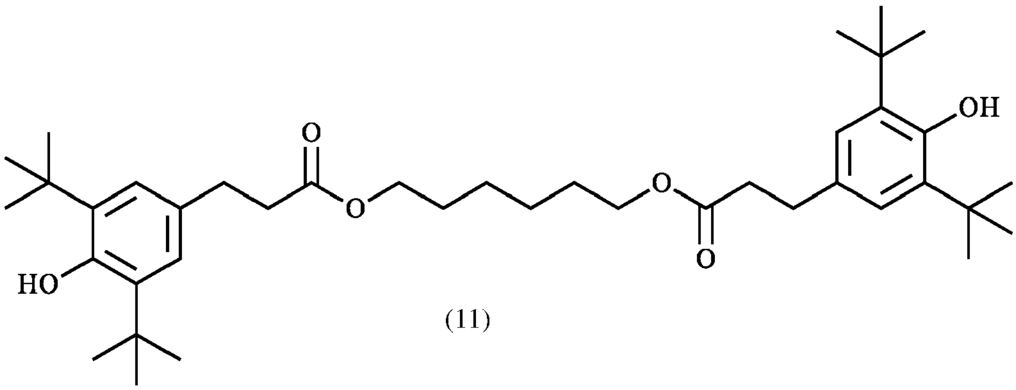

(11)

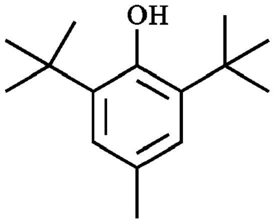

(12)

Die Verbindung (7) ist als CAS: 2082-79-3 klassifiziert und kommerziell unter dem Namen Irganox™ 1076 der Firma BASF (Deutschland) verfügbar.

Die Verbindung (8) ist als CAS: 1709-70-2 klassifiziert und kommerziell unter dem Namen Songnox™ 1330 der Firma Songwon Industrial Group (Südorea) verfügbar.

Die Verbindung (9) ist als CAS: CAS 90498-90-1 klassifiziert und kommerziell unter dem Namen Adeka Stab™ AO 80 1076 der Firma Adeka (Japan) verfügbar.

Die Verbindung (10) ist als CAS: CAS 40601-76-1 klassifiziert und kommerziell unter dem Namen Cyanox™ 1790 der Firma Solvay (Belgien) verfügbar.

Die Verbindung (11) ist als CAS: 35074-77-2 klassifiziert und kommerziell unter dem Namen Irganox™ 259 der Firma BASF (Deutschland) verfügbar.

Die Verbindung (12) ist als CAS: 128-37-0 klassifiziert und kommerziell unter dem Namen Ionol™ 200N der Firma Oxiris (Spanien) verfügbar.

## Komponente C

Neben den Komponenten A und B kann die Zusammensetzung als Komponente C weitere Polymeradditive, Füllstoffe oder weitere polymere Komponenten enthalten.

Bei dem Additiv kann es sich beispielsweise um im Bereich der Thermoplasttechnologie gängige Additive handeln. Selbstverständlich kann es ebenfalls von Vorteil sein, mehrere Additive mehrerer Typen zu verwenden.

Als weitere polymere Komponenten geeignet sind bekannte Thermoplasten oder Mischungen solcher Thermoplaste.

Aus den Komponenten A, B und optional C werden die erfindungsgemäßen thermoplastische Formmassen hergestellt. Die erfindungsgemäßen thermoplastischen Formmassen können beispielsweise hergestellt werden, indem man die jeweiligen Bestandteile der Zusammensetzungen in bekannter Weise vermischt und bei Temperaturen von bevorzugt 185 °C bis 260 °C, besonders bevorzugt bei 190 °C bis 230 °C in üblichen Aggregaten wie beispielsweise Innenknetern, Extrudern und Doppelwellenschnecken schmelzecompoundiert und schmelzeextrudiert. Dieser Prozess wird im Rahmen dieser Anmeldung allgemein als Compoundieren bezeichnet.

Unter Formmasse wird also das Produkt verstanden, das erhalten wird, wenn die Komponenten A, B und optional C schmelzecompoundiert oder schmelzeextrudiert werden.

Die Vermischung der einzelnen Bestandteile der Zusammensetzungen kann in bekannter Weise sowohl sukzessive als auch simultan erfolgen, und zwar sowohl bei etwa 20°C (Raumtemperatur) als auch bei höherer Temperatur. Das bedeutet, dass beispielsweise manche der Bestandteile über den Haupteinzug eines Extruders dosiert und die restlichen Bestandteile über einen Seitenextruder später im Compoundierverfahren zugeführt werden können.

Gegenstand der Erfindung ist auch ein Verfahren zur Herstellung der erfindungsgemäßen Formmassen.

Die erfindungsgemäßen thermoplastischen Formmassen können zur Herstellung von Formkörpern, Folien und

/ oder Fasern jeder Art verwendet werden. Ein weiterer Gegenstand der Erfindung ist daher ein Formkörper, eine Folie und / oder eine Faser, wobei der Formkörper, die Folie oder die Faser mindestens eine erfindungsgemäße thermoplastische Formmasse umfasst. Diese können beispielsweise durch Spritzguss, Extrusion, insbesondere Rohrextrusion, Blasformverfahren und / oder Schmelzspinnen hergestellt werden. Eine weitere Form der Verarbeitung ist die Herstellung von Formkörpern durch Tiefziehen aus zuvor hergestellten Platten oder Folien.

Es ist auch möglich, die Komponenten A, B, und optional C direkt in eine Spritzgussmaschine oder in ein Extrusionsaggregat zu dosieren und zu Formkörper zu verarbeiten.

Ein weiterer Gegenstand der Erfindung ist die Verwendung der erfindungsgemäßen Formmasse zur Herstellung eines spritzgegossenen Formkörpers, eines extrudierten Formkörpers, einer Folie, einer Faser oder eines 3D gedruckten Formkörpers .

Insbesondere sind die folgenden Ausführungsformen bevorzugt:

1. Thermoplastische Formmasse enthaltend

A) mindestens ein thermoplastisches Polyurethanpolymer erhältlich durch die Umsetzung von mindestens folgenden Aufbaukomponenten:

I) einem oder mehreren aliphatischen Diisocyanaten mit einem Molekulargewicht von 140 g/mol bis 170 g/mol und
II) einem oder mehreren aliphatischen Diolen mit einem Molekulargewicht von 62 g/mol bis 120 g/mol,

wobei die zur Erzeugung des thermoplastischen Polyurethanpolymers eingesetzten Aufbaukomponenten zu mindestens 95 Gew.-% aus einem oder mehreren aliphatischen Diisocyanaten I) und einem oder mehreren aliphatischen Diolen II), bezogen auf die Gesamtmasse der eingesetzten Aufbaukomponenten, bestehen, wobei die einen oder mehreren aliphatischen Diisocyanate I) und die einen oder mehreren aliphatischen Diole II) in einem molaren Verhältnis im Bereich von 1,0 : 0,95 bis 0,95 : 1,0 eingesetzt werden, dadurch gekennzeichnet, dass das Verhältnis $\overline{M}_z/\overline{M}_w$ des thermoplastischen Polyurethanpolymers in einem Bereich von 2,3 bis 6 liegt, wobei $\overline{M}_z$ das Zentrifugenmittel der Molmasse und $\overline{M}_w$ das Massenmittel der Molmasse ist, jeweils bestimmt durch Gelpermeationschromatographie in Hexafluoroisopropanol gegen Polymethylmethacrylat als Standard,

B) mindestens ein sterisch gehindertes Phenol.

2. Formmasse gemäß Ausführungsform 1, dadurch gekennzeichnet, dass als Komponente B eine Verbindung gemäß der allgemeinen Struktur (1a) oder (1b) eingesetzt wird

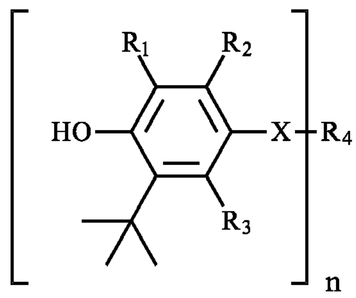

(1a)

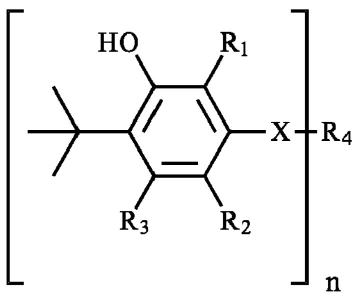

(1b)

wobei n 1, 2, 3 oder 4 bedeutet,
$R_1$, $R_2$ und $R_3$ jeweils unabhängig voneinander für $C_1$- bis $C_4$-Alkyl oder Wasserstoff stehen
X für eine direkte Bindung oder einen organischen Rest mit $C_1$- bis $C_{60}$- steht und der organische Rest Sauerstoff und/oder Schwefel und/oder Stickstoff enthalten kann.
$R_4$ für eine direkte Bindung, Kohlenstoff, $C_1$-$C_8$ Alkyl, Aryl oder eine Struktur gemäß Formel (2a) (2b) oder (2c) steht.

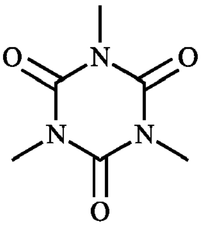

(2a)

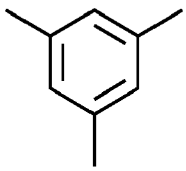

(2b)

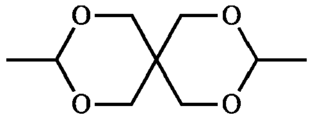

(2c)

3. Formmasse gemäß einer der vorhergehenden Ausführungsformen, dadurch gekennzeichnet, dass als Komponente B mindestens eine Verbindung eingesetzt wird ausgewählt ist der Gruppe bestehend aus Verbindungen gemäß den Strukturen (3), (4), (5) und (6).

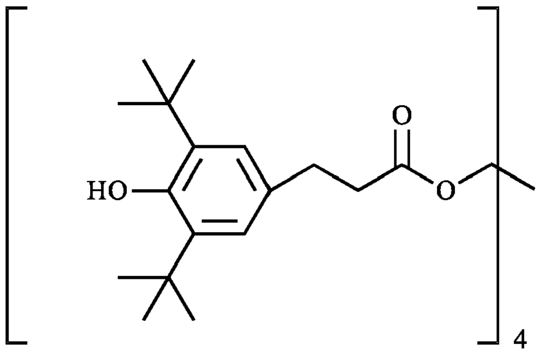

(3)

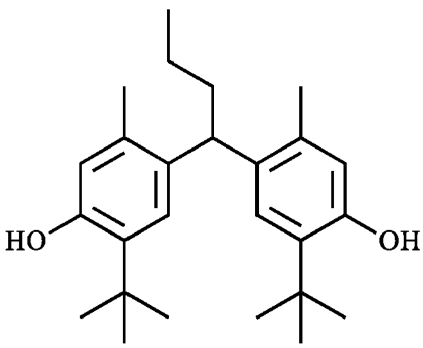

(4)

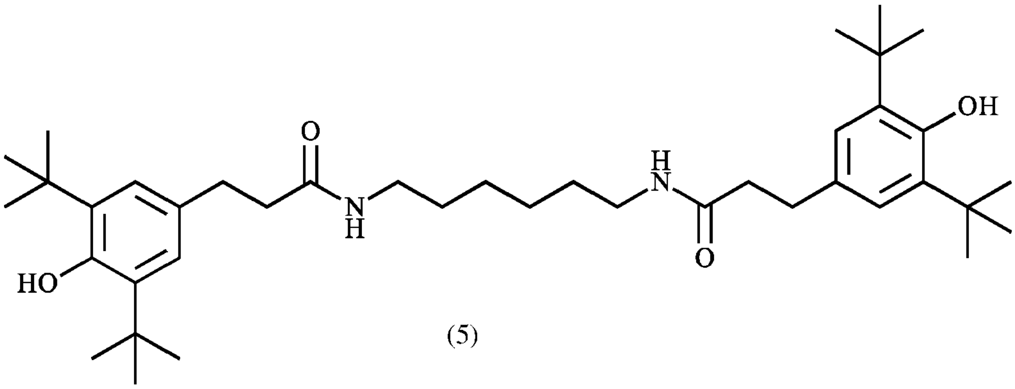

(5)

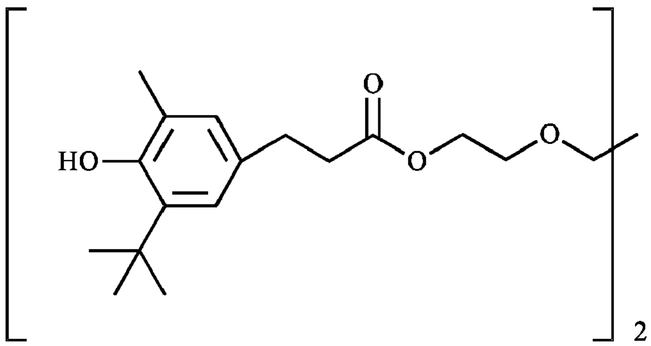

(6)

4. Formmasse gemäß einer Ausführungsform 3, dadurch gekennzeichnet, dass als Komponente B dass als Komponente B mindestens ein sterisch gehindertes Phenol ausgewählt aus der Gruppe bestehend aus den Verbindungen gemäß den Strukturen (5) und (6) eingesetzt wird

5. Formmasse gemäß Ausführungsform 3, dadurch gekennzeichnet, dass als Komponente B eine Verbindung gemäß Struktur (6) eingesetzt wird.

6. Formmasse gemäß einer der vorhergehenden Ausführungsformen, weiterhin optional enthaltend als Komponente C weitere Polymeradditive, Füllstoffe und/oder weitere polymere Komponenten.

7. Formmasse gemäß einer der vorhergehenden Ausführungsformen enthaltend 0,005 bis 1,5 Gew.-% der Komponente B.

8. Formmasse gemäß einer der vorhergehenden Ausführungsformen enthaltend 0,01 bis 0,8 Gew.-% der Komponente B.

9. Formmasse gemäß einer der Ausführungsformen 1 bis 7 enthaltend 38,5 bis 99,995 Gew.-% der Komponente A, 0,005 bis 1,5 Gew.-% der Komponente B und 0 bis 60 Gew.-% der Komponente C.

10. Formmasse gemäß einer der vorhergehenden Ausführungsformen enthaltend 79,5 bis 99,89 Gew.-% der Komponente A, 0,01 bis 0,8 Gew.-% der Komponente B und 0,1 bis 20 Gew.-% der Komponente C.

11. Formmasse gemäß einer der vorhergehenden Ausführungsformen, dadurch gekennzeichnet, dass das Verhältnis $\overline{M}_z/\overline{M}_w$ der Komponente A in einem Bereich von 2,5 bis 5,5 liegt.

12. Formmasse gemäß einer der vorhergehenden Ausführungsformen, dadurch gekennzeichnet, dass das Verhältnis $\overline{M}_z/\overline{M}_w$ der Komponente A in einem Bereich von 2,5 bis 5 liegt.

13. Formmasse gemäß einer der vorhergehenden Ausführungsformen, dadurch gekennzeichnet, dass der $\overline{M}_z$-Wert der Komponente A in einem Bereich von 80000 g/mol bis 900000 g/mol liegt, bestimmt durch Gelpermeationschromatographie in Hexafluoroisopropanol gegen Polymethylmethacrylat als Standard.

14. Formmasse gemäß einer der vorhergehenden Ausführungsformen, dadurch gekennzeichnet, dass der $\overline{M}_z$-Wert der Komponente A in einem Bereich von 85000 g/mol bis 760000 g/mol liegt, bestimmt durch Gelpermeationschromatographie in Hexafluoroisopropanol gegen Polymethylmethacrylat als Standard.

15. Formmasse gemäß einer der vorhergehenden Ausführungsformen, dadurch gekennzeichnet, dass die Komponente A zu mindestens 96 Gew.-% aus einem oder mehreren aliphatischen Diisocyanaten I) und einem oder mehreren aliphatischen Diolen II), bezogen auf die Gesamtmasse des Polyurethanpolymers, besteht.

16. Formmasse gemäß einer der vorhergehenden Ausführungsformen, dadurch gekennzeichnet, dass die Komponente A zu mindestens 99,9 Gew.-% aus einem oder mehreren aliphatischen Diisocyanaten I) und einem oder mehreren aliphatischen Diolen II), bezogen auf die Gesamtmasse des Polyurethanpolymers, besteht.

17. Formmasse gemäß einer der vorhergehenden Ausführungsformen, dadurch gekennzeichnet, dass das eine oder die mehreren aliphatischen Diisocyanate I) ausgewählt sind aus der Gruppe bestehend aus 1,4-Diisocyanatobutan, 1,5-Diisocyanatopentan, 1,6-Diisocyanatohexan, 2-Methyl-1,5-diisocyanatopentan und / oder Mischungen aus mindestens zwei hieraus, vorzugsweise 1,5-Diisocyanatopentan und / oder 1,6-Diisocyanatohexan.

18. Formmasse gemäß einer der vorhergehenden Ausführungsformen, dadurch gekennzeichnet, dass das eine oder die mehreren aliphatischen Diisocyanate I) ausgewählt sind aus der Gruppe bestehend aus 1,5-Diisocyanatopentan und / oder 1,6-Diisocyanatohexan.

19. Formmasse gemäß einer der vorhergehenden Ausführungsformen, dadurch gekennzeichnet, dass das eine oder die mehreren aliphatischen Diisocyanat I) 1,6-Diisocyanatohexan ist.

20. Formmasse gemäß einer der vorhergehenden Ausführungsformen, dadurch gekennzeichnet, dass das eine oder die mehreren aliphatischen Diole II) ausgewählt sind aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol und / oder Mischungen aus mindestens zwei hieraus, vorzugsweise 1,3-Propandiol, 1,4-Butandiol, 1,6-Hexandiol und / oder Mischungen aus mindestens zwei hieraus, besonders bevorzugt 1,4-Butandiol.

21. Formmasse gemäß einer der vorhergehenden Ausführungsformen, dadurch gekennzeichnet, dass das eine oder die mehreren aliphatischen Diole II) ausgewählt sind aus der Gruppe bestehend 1,3-Propandiol, 1,4-Butandiol, 1,6-Hexandiol und / oder Mischungen aus mindestens zwei hieraus, besonders bevorzugt 1,4-Butandiol.

22. Formmasse gemäß einer der vorhergehenden Ausführungsformen, dadurch gekennzeichnet, dass das eine oder die mehreren aliphatischen Diol II) 1,4-Butandiol ist.

23. Formmasse gemäß einer der vorhergehenden Ausführungsformen, dadurch gekennzeichnet, dass die Komponente A einen Urethangruppengehalt von 40 Gew.-% bis 60 Gew.-%, vorzugsweise von 40 Gew.-% bis 52 Gew.-%, bezogen auf das Gesamtgewicht des thermoplastischen Polyurethanpolymers, aufweist.

24. Formmasse gemäß einer der vorhergehenden Ausführungsformen, dadurch gekennzeichnet, dass die Komponente A einen Urethangruppengehalt 40 Gew.-% bis 52 Gew.-%, bezogen auf das Gesamtgewicht des thermoplastischen Polyurethanpolymers, aufweist.

25. Formmasse gemäß einer der vorhergehenden Ausführungsformen, dadurch gekennzeichnet, dass die Komponente A ein mittels Elementaranalyse bestimmtes Gewichtsprozent-Verhältnis von O zu N von ≥ 1,5:1 bis ≤ 2,6:1 und ein mittels Elementaranalyse bestimmtes Gewichtsverhältnis N zu C von ≥ 1:10 bis ≤ 1:3 aufweist.

26. Formmasse gemäß einer der vorhergehenden Ausführungsformen, dadurch gekennzeichnet, dass die Komponente A ein semikristallines thermoplastisches Polyurethanpolymer ist.

27. Formmasse gemäß einer der vorhergehenden Ausführungsformen, dadurch gekennzeichnet, dass die Komponente A einen Glasübergangspunkt von < 50 °C, vorzugsweise im Bereich zwischen ≥ 0° C und < 50 °C aufweist, bestimmt mit Differential Scanning Calorimetry gemäß DIN EN 61006 (November 2004).

28. Formmasse gemäß einer der vorhergehenden Ausführungsformen, dadurch gekennzeichnet, dass die Komponente A einen Schmelzpunkt von > 150 °C, vorzugsweise im Bereich zwischen 150°C und 200°C, aufweist bestimmt mit Differential Scanning Calorimetry gemäß DIN EN 61006 (November 2004).

29. Formmasse gemäß einer der vorhergehenden Ausführungsformen, dadurch gekennzeichnet, dass zwischen dem Glasübergangspunkt, bestimmt mit Differential Scanning Calorimetry gemäß DIN EN 61006 (November 2004), und dem Schmelzpunkt, bestimmt mit Differential Scanning Calorimetry gemäß DIN EN 61006 (November 2004), der Komponente A mindestens 100° C liegen.

30. Formmasse gemäß einer der vorhergehenden Ausführungsformen, dadurch gekennzeichnet, dass die zur Erzeugung der Komponente A eingesetzten Aufbaukomponenten zu 95 Gew.-% bis 99,9 Gew.-% aus einem oder mehreren aliphatischen Diisocyanaten I) und einem oder mehreren aliphatischen Diolen II) und zu 0,1 Gew.-% bis 5 Gew.-% aus einem oder mehreren Polyisocyanaten III) und / oder einer oder mehreren NCO-reaktive Verbindungen IV) bestehen, bezogen auf die Gesamtmasse der eingesetzten Aufbaukomponenten.

31. Formmasse gemäß einer der vorhergehenden Ausführungsformen bestehend zu mindestens 90 Gew.-% aus den Komponenten A, B und C.

32. Formmasse gemäß einer der vorhergehenden Ausführungsformen bestehend aus den Komponenten A, B und C.

33. Verwendung einer Formmasse gemäß einer der vorhergehenden Ausführungsformen zur Herstellung von Formkörpern.

34. Formkörper enthaltend eine Formmasse gemäß einer der vorhergehenden Ausführungsformen 1 bis 32.

Die Erfindung soll anhand der nachfolgenden Beispiele näher erläutert werden, ohne sie jedoch hierauf zu beschränken.

Zur näheren Erläuterung der Erfindung dienen die nachfolgend erläuterte Abbildung und die Beispiele, wobei diese lediglich Anschauungsbeispiele für bestimmte Ausführungsformen darstellen, nicht jedoch eine Beschränkung des Umfangs der Erfindung. Es zeigen im Einzelnen:

**Abbildung 1:** Bevorzugte Ausführungsform eines Aufbaus zur Durchführung einer zweistufigen kontinuierlichen Herstellung eines erfindungsgemäßen thermoplastischen Polyurethans, durch Reaktionsfolge in Schleifenreaktor und Extruder.

## Beispiele

### Herstellung der Komponente A

Alle Prozentangaben beziehen sich, soweit nichts Anderslautendes vermerkt, auf das Gewicht.

Die zur Zeit der Versuchsdurchführung herrschende Umgebungstemperatur von 25 °C wird als RT (Raumtemperatur) bezeichnet.

### Verwendete Rohstoffe:

1,6-Hexamethylendiisocyanat (HDI, Reinheit ≥ 99 Gew.-%) wurde von der Covestro AG bezogen.

1,4-Butandiol (BDO, Reinheit ≥ 99 Gew.-%) wurde von der Firma Ashland bezogen.

Hexafluorisopropanol wurde von der Firma flurochem in einer Reinheit von 99,9 Gew.-% bezogen.

Kaliumtrifluoracetat bezogen von der Firma Aldrich, in einer Reinheit von 98 Gew.-%.

### Gelpermeationschromatographie:

Die Molmassen der Polymere wurden mit Hilfe einer Gelpermeationschromatographie (GPC) bestimmt. Dazu wurde die zu vermessende Probe in einer Lösung von 3 g Kaliumtrifluoracetat in 400 Kubikzentimeter Hexafluorisopropanol aufgelöst (Probenkonzentration ca. 2 mg/Kubikzentimeter). Die jeweiligen GPCs wurden mit folgenden Komponenten bei einer Flussrate von 1 Kubikzentimeter/Minute gemessen:

| | |
|---|---|
| Pumpe: | HPLC-Pumpe 515 (Waters GmbH) |
| Detektor: | Smartline RI-Detektor 2300 (Knauer Wissenschaftliche Geräte |
| Säulen: | 1 Vorsäule, 1000 Å PSS PFG 7 μm, 300 Å PSS PFG 7 μm, 100 Å PSS PFG 7 μm in der angegebenen Reihenfolge |
| Entgasung: | Degaser PSS (Polymer Standards Service GmbH) |
| Injektionsvolumen: | 100 Mikroliter |
| Temperatur: | 23 - 25 °C |
| Molmassen-Standard: | Polymethylmethacrylat-Standard-Kit (PSS Polymer Standards Service GmbH) |

$\overline{M}_z$ und $\overline{M}_w$ wurden wie oben angegeben berechnet.

**Differential Scanning Calorimetry (DSC)**

Schmelzpunkte und Glasübergangspunkte wurde mittels DSC (Differential Scanning Calorimetry) mit einem Mettler DSC 12E (Mettler Toledo GmbH, Gießen, DE) entsprechend DIN EN 61006 (November 2004) bestimmt. Eine Kalibrierung erfolgte durch die Temperatur des Schmelz-Onsets von Indium und Blei. Es wurden 10 mg Substanz in Normalkapseln eingewogen. Die Messung erfolgte durch drei Aufheizungen von -50 °C bis +200 °C bei einer Heizrate von 20 K/min mit anschließender Abkühlung mit einer Kühlrate von 20 K/min. Die Kühlung erfolgte durch flüssigen Stickstoff. Als Spülgas wurde Stickstoff verwendet. Die angegebenen Werte basieren jeweils auf der Auswertung der 2. Aufheizkurve.

**Herstellung der Komponente A (Abbildung 1):**

Aus einer 250 - Liter - Vorlage für 1,6-Hexamethylendiisocyanat 1 wurde mit Hilfe einer Zahnringpumpe 2 (Firma HNP, MZR 7255) ein 1,6-Hexamethylendiisocyanat -Strom A zu einem Statikmischer 7 gefördert. Der Durchsatz des 1,6-Hexamethylendiisocyanat -Stroms A wurde mittels eines Massedurchflussmessers 3 (Firma Bronkhorst, Mini Cori-Flow M1X, max. Durchfluss 12 kg/h) gemessen. Aus einer 250 - Liter - Vorlage für 1,4-Butandiol 4 wurde mit Hilfe einer Zahnringpumpe 5 (Firma HNP, MZR 7205) ein 1,4-Butandiol-Strom B zum Statikmischer 7 gefördert. Der Durchsatz des 1,4-Butandiol-Stroms wurde mittels eines Massedurchflussmessers 6 (Firma Bronkhorst, Mini Cori-Flow M1X, max. Durchfluss 8 kg/h) gemessen. Die Temperatur des 1,6-Hexamethylendiisocyanats betrug dabei Raumtemperatur. Die Temperatur des 1,4-Butandiols betrug 40 °C. In dem Statikmischer 7 (Sulzer SMX, Durchmesser 6 mm, Verhältnis von Länge zu Durchmesser L/D = 10) wurden der 1,6-Hexamethylendiisocyanat-Strom A und der 1,4-Butandiol-Strom B miteinander gemischt. Dies ist der Strom C.
Der gemischte und dispergierte Strom C wird in einem Umlauf mit einem umlaufenden Polymerstrom D in einem Statikmischer 8 (Statikmischer äquivalent zu Sulzer SMX, Innendurchmesser 34 mm, L/D=20) zu einem Strom H gemischt. Die Temperatur des Stromes D betrug 182 °C.

Der gemischte und teilweise schon reagierte Strom H wurde in einen temperierbaren statischen Mischer 9 geführt. Dort lief die Reaktion zum großen Teil ab und die entstehende Reaktionswärme wurde abgeführt. Der temperierbare statische Mischer 9 war ähnlich aufgebaut wie ein Sulzer SMR-Reaktor mit innenliegenden, gekreuzten Rohren. Er hatte ein Innenvolumen von 1,9 Litern, eine Wärmeaustauschfläche von 0,44 Quadratmeter. Er war mit Wärmeträgeröl beheizt/gekühlt. Die Heizmitteltemperatur am Eintritt betrug 180 °C.
Aus dem temperierbaren statischen Mischer 9 trat der Produktstrom als weitgehend ausreagierter Strom E mit einer Temperatur von 183 °C aus. Der Strom E wurde an einer Verzweigung 11 in zwei Teilströme F und G aufgespalten. Der Druck des Teilstrom F wurde an einer Zahnradpumpe 10 erhöht. Der Teilstrom F wurde nach der Pumpe zum oben erwähnten Teilstrom D.
Die Zahnradpumpe 10 (Firma Witte Chem 25,6-3), hatte ein Volumen pro Umdrehung von 25,6 Kubikzentimeter und eine Drehzahl von 50 pro Minute.

Die ganze Umlauf war voll gefüllt, und das Polymer zum großen Teil inkompressibel. Daher war der Massenstrom des Stroms G identisch mit dem des Stroms C. Der Strom G bestand aus Oligomer. Der ganze Umlauf bestand aus doppelwandig ausgeführten Rohrleitungen und Apparaten, die mit Thermoöl beheizt waren. Die Heizmitteltemperatur betrug 182 °C.
Hinter dem Druckhalteventil 12 wurde der Strom G an einem Dreiwegeventil 13 vorbeigeführt. Dort konnte es bei An- und Abfahren oder bei Störungen auf einen Abfallbehälter 14, ein offenes 60-Liter-Metallfass mit Absaugung, gefahren werden. Im regulären Betrieb wurde der Strom G auf einen Extruder 18 geleitet.

Aus der 1,6-Hexamethylendiisocyanat-Vorlage 1 wurde mit Hilfe einer Mikrozahnringpumpe 15 (MZR 6355 der

Firma HNP) ein 1,6-Hexamethylendiisocyanat-Strom J entnommen. Der Durchsatz des 1,6-Hexamethylendiisocyanat-Stroms J wurde mittels eines Massedurchflussmessers 16 (Firma Bronkhorst, Mini Cori-Flow, M1X, maximaler Durchfluss 2 kg/h) gemessen. Die Temperatur des 1,6-Hexamethylendiisocyanat-Stroms J betrug ebenfalls Raumtemperatur. Dieser Strom wurde ebenfalls auf den Extruder 18 geleitet.

Der Extruder 18 war eine ZSK 26 MC der Firma Coperion, der bei Temperaturen von 200 °C und einer Drehzahl von 66 Umdrehungen pro Minute betrieben wurden. Auf diesem Extruder wurde der Strom G über eine Entlüftung 17, die bei ca. 1 mbar Unterdruck gegenüber dem Umgebungsdruck betrieben wurde, von eventuell mit den Stoffströmen A und B eingeschleppten Inertgasen und möglichen flüchtigen Reaktionsprodukten befreit. Stromab von der Zugabe des Oligomerstroms G wurde der 1,6-Hexamethylendiisocyanat-Strom J zugegeben und die Reaktion zum Polymer durchgeführt. Vor Ende des Extruders wurde der entstehende Polymerstrom über eine Entgasung 19 noch von flüchtigen Bestandteilen befreit. Der Druck in dieser Entgasung betrug 200 mbar unter Umgebungsdruck. Der Polymerstrom K wurde durch zwei Düsen ausgepresst, in einem mit deionisierten Wasser (VE-Wasser) gefüllten Wasserbad 20 abgekühlt und durch einen Granulator 21 zu Granulat zerschnitten.

Tabelle 1 zeigt die Stoffströme, die zur Herstellung der Komponente A verwendet wurden

**Beschreibung der verwendeten Extruderkonfiguration:**

Wenn in der nachfolgenden Beschreibung von "Elementen" die Rede ist, so kann es sich um ein oder mehrere Elemente handeln. Dem Fachmann ist klar, dass Extruderelemente bei gleicher Außenkontur die gleiche Aufgabe erfüllen, unabhängig von der Stückelung.

Eine Oligomer-Dosierung, gefolgt von einem rückfördernden Elemente der Länge 12 mm und der Steigung 24 mm, gefolgt von einer Entgasungszone der Länge 84 mm mit Elementen der Steigung 48 mm und 24 mm, wobei die Länge der Gehäuseöffnung 50 mm betrug, gefolgt von einem rückfördernden Element der Länge 12 mm, gefolgt von einer Dosierzone mit einem Förderelement, für das HDI der Länge 24 mm mit der Steigung 48 mm, gefolgt von einer Knetzone der Länge 84 mm, eine Zone mit Förderelementen der Steigung 12 mm mit der Länge von 240 mm, einer Zone mit Förderelementen der Steigung 16 mm mit der Länge von 128 mm, eine Zone mit einem rückfördernden Element der Steigung 24 mm mit der Länge 12 mm, eine Zone zur Entgasung mit Förderelementen der Steigung 48 mm mit der Länge 96 mm, an der seitlich die Entgasungsschnecke angebracht war, und eine Zone mit Förderelementen der Steigung 16 mm mit der Länge 96 mm

**Tabelle 1:** Stoffströme bei der Herstellung der Komponente A

| | **A** |
|---|---|
| Strom A [kg/h] | 4,370 |
| Strom B [kg/h] | 3,000 |
| Strom J [kg/h] | 1,180 |

**Charakterisierung der hergestellten Komponente A**

Es ergaben sich folgende charakteristische Werte für die Molmassenverteilung der Komponente A:

$\overline{M}_z$ = 92000 g/mol

$\overline{M}_w$ = 36500 g/mol, damit $\overline{M}_z$ / $\overline{M}_w$ = 2,5

Die Komponente A weist eine Glasübergangstemperatur Tg von 34 °C und eine Schmelzetemperatur Tm von 183 °C auf.

Die Komponente A weist einen Urethangruppengehalt gemäß der oben dargestellten Berechnung von 45 % auf.

**Komponente B:**

B1: Sterisch gehindertes Phenol gemäß Struktur (3), ADK Stab AO-60, Adeka (Japan)

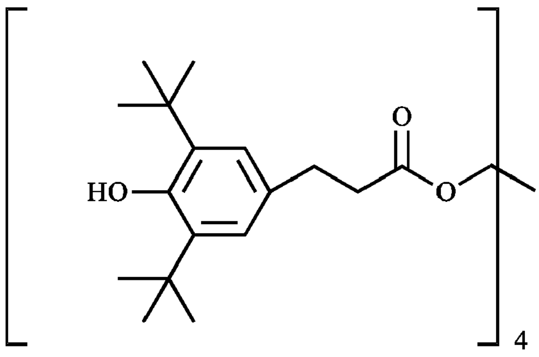

(3)

B2: Sterisch gehindertes Phenol gemäß Struktur (4), Songnox™ 4425 der Firma Songwon Industrial Group (Korea).

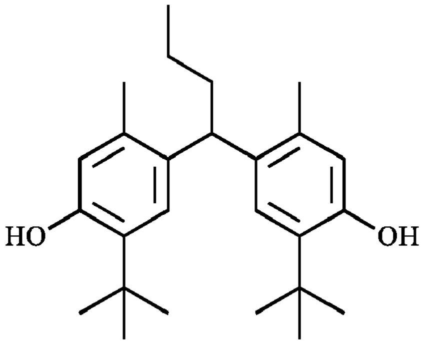

(4)

B3: Sterisch gehindertes Phenol gemäß Struktur (5), Songnox™ 1098 der Firma Songwon Industrial Group (Korea).

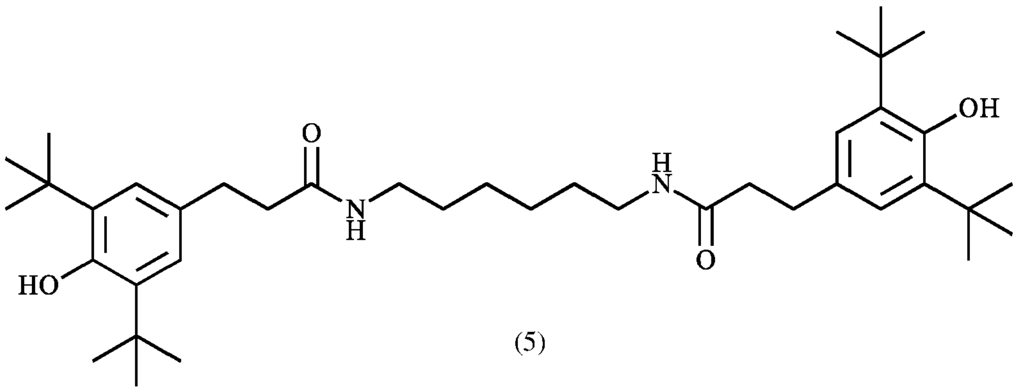

(5)

B4: Sterisch gehindertes Phenol gemäß Struktur (6), Irganox™ 245 der Firma BASF (Deutschland).

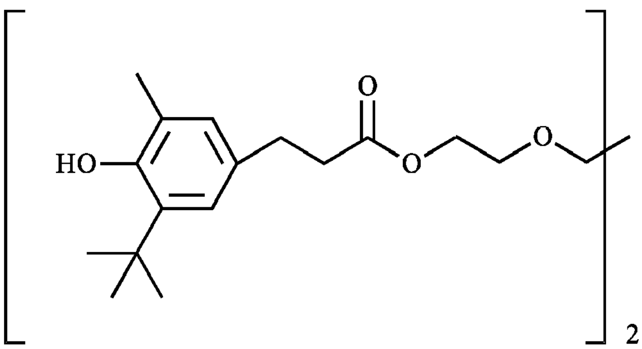

(6)

## Herstellung und Prüfung der erfindungsgemäßen Formmassen

Das Mischen der Komponenten erfolgte auf einem Zweiwellenextruder ZSK-25 der Fa. Werner & Pfleiderer bei einer Massetemperatur von 200°C. Die Formkörper wurden bei einer Massetemperatur von 200°C und einer Werkzeugtemperatur von 60°C auf einer Spritzgießmaschine Typ Arburg 270 E hergestellt.

Die Zugfestigkeit wurde gemäß ISO 527 (Version von 1996) an Schulterstäben mit den Maßen 170 x 10 x 4 mm bei Raumtemperatur bestimmt.

Weiterhin wurden solche Probekörper bei 140 °C für 2000 Stunden in Umlufttrockenschrank gelagert und danach die Zugfestigkeit wie oben beschrieben bestimmt. Es wird dann berechnet, welcher Anteil (in %) der Zugfestigkeit nach dieser Lagerung erhalten bleibt.

Die so erhaltenen Ergebnisse sind in Tabelle 2 zusammengefasst.

Die Daten zeigen, dass durch die Zugabe von sterisch gehinderten Phenolen die Zugfestigkeit nach Wärmealterung deutlich stabilisiert werden kann. Besonders gute Ergebnisse werden mit den Komponenten B3 und B4 erreicht.

**Tabelle 2:** Zusammensetzungen der Formmassen und ihre Eigenschaften.

| **Komponente (Gew.Teile)** | | **V1** | **1** | **2** | **3** | **4** |
|---|---|---|---|---|---|---|
| A | | 100 | 99,75 | 99,75 | 99,75 | 99,75 |
| B1 | | | 0,25 | | | |
| B2 | | | | 0,25 | | |
| B3 | | | | | 0,25 | |
| B4 | | | | | | 0,25 |
| **Thermolagerung** | 140°C | | | | | |
| Zugversuch (ISO 527) | Einheit | | | | | |
| Verbleibende Zugfestigkeit (2.000 Stunden) | (%) | 49 | 73 | 62 | 81 | 80 |

## Patentansprüche

1. Thermoplastische Formmasse enthaltend

   A) mindestens ein thermoplastisches Polyurethanpolymer erhältlich durch die Umsetzung von mindestens folgenden Aufbaukomponenten:

      I) einem oder mehreren aliphatischen Diisocyanaten mit einem Molekulargewicht von 140 g/mol bis 170 g/mol und
      II) einem oder mehreren aliphatischen Diolen mit einem Molekulargewicht von 62 g/mol bis 120 g/mol,

   wobei die zur Erzeugung des thermoplastischen Polyurethanpolymers eingesetzten Aufbaukomponenten zu mindestens 95 Gew.-% aus einem oder mehreren aliphatischen Diisocyanaten I) und einem oder mehreren aliphatischen Diolen II), bezogen auf die Gesamtmasse der eingesetzten Aufbaukomponenten, bestehen, wobei die einen oder mehreren aliphatischen Diisocyanate I) und die einen oder mehreren aliphatischen Diole II) in einem molaren Verhältnis im Bereich von 1,0 : 0,95 bis 0,95 : 1,0 eingesetzt werden, **dadurch gekennzeichnet, dass** das Verhältnis $\overline{M_z}/\overline{M_w}$ des thermoplastischen Polyurethanpolymers in einem Bereich von 2,3 bis 6 liegt, wobei $\overline{M}_z$ das Zentrifugenmittel der Molmasse und $\overline{M}_w$ das Massenmittel der Molmasse ist, jeweils bestimmt durch Gelpermeationschromatographie in Hexafluoroisopropanol gegen Polymethylmethacrylat als Standard
   B) mindestens ein sterisch gehindertes Phenol.

2. Formmasse gemäß Anspruch 1, **dadurch gekennzeichnet, dass** als Komponente B eine Verbindung gemäß der allgemeinen Struktur (1a) oder (1b) eingesetzt wird

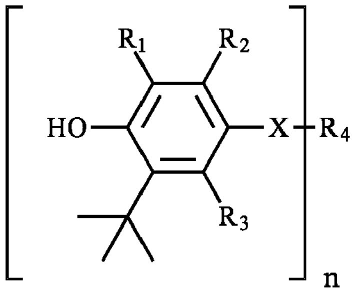

(1a)

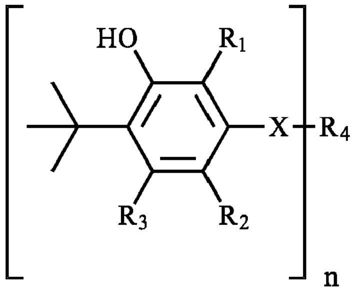

(1b)

wobei n 1, 2, 3 oder 4 bedeutet,
$R_1$, $R_2$ und $R_3$ jeweils unabhängig voneinander für $C_1$- bis $C_4$-Alkyl oder Wasserstoff stehen X für eine direkte Bindung oder einen organischen Rest mit $C_1$- bis $C_{60}$- steht und der organische Rest Sauerstoff und/oder Schwefel und/oder Stickstoff enthalten kann.
$R_4$ für eine direkte Bindung, Kohlenstoff, $C_1$-$C_8$ Alkyl, Aryl oder eine Struktur gemäß Formel (2a) (2b) oder (2c) steht.

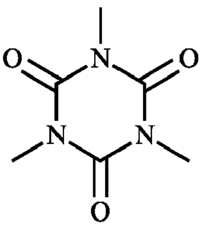

(2a)

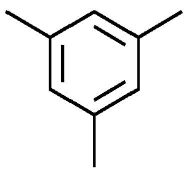

(2b)

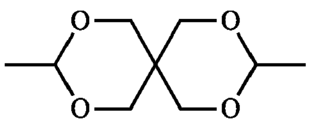

(2c)

**3.** Formmasse gemäß einem der vorhergehenden Ansprüche, **dadurch gekennzeichnet, dass** als Komponente B mindestens ein sterisch gehindertes Phenol ausgewählt aus der Gruppe bestehend aus den Verbindungen gemäß den Strukturen (5) und (6) eingesetzt wird

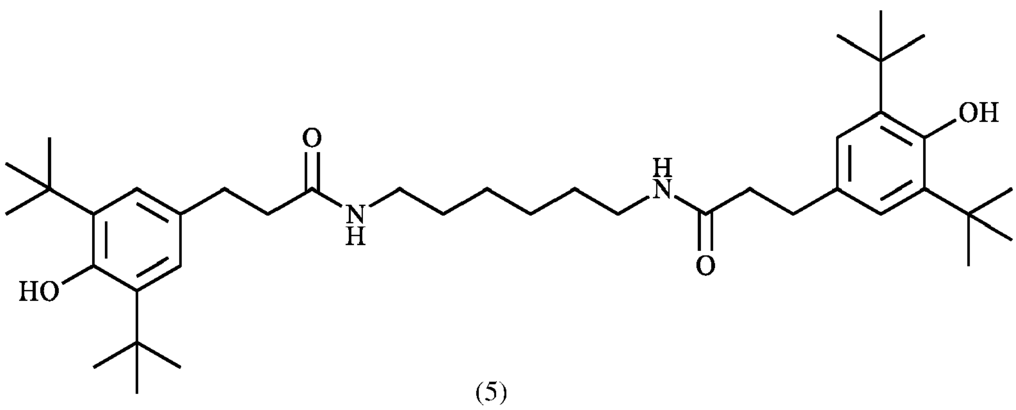

(5)

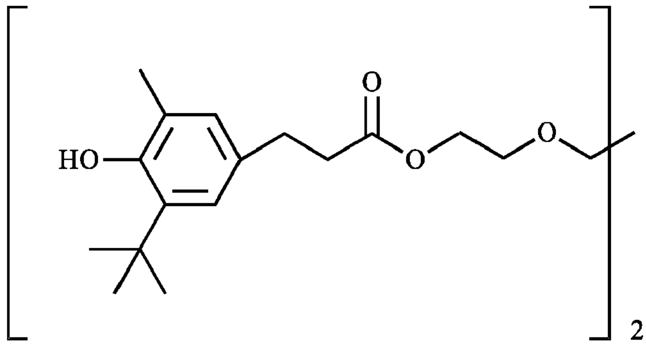

(6)

4. Formmasse gemäß einem der vorhergehenden Ansprüche enthaltend 0,005 bis 1,5 Gew.-% der Komponente B.

5. Formmasse gemäß einem der vorhergehenden Ansprüche, **dadurch gekennzeichnet, dass** der $\overline{M}_z$-Wert der Komponente A in einem Bereich von 80000 g/mol bis 900000 g/mol, vorzugsweise in einem Bereich von 80000 g/mol bis 850000 g/mol, besonders bevorzugt in einem Bereich von 85000 g/mol bis 800000 g/mol und noch bevorzugter in einem Bereich von 85000 g/mol bis 760000 g/mol liegt, bestimmt durch Gelpermeationschromatographie in Hexafluoroisopropanol gegen Polymethylmethacrylat als Standard.

6. Formmasse gemäß einem der vorhergehenden Ansprüche, **dadurch gekennzeichnet, dass** die Komponente A zu mindestens 96 Gew.-%, vorzugsweise zu mindestens 97 Gew.-%, besonders bevorzugt zu mindestens 98 Gew.-%, noch bevorzugter zu mindestens 99 Gew.-%, noch mehr bevorzugter zu mindestens 99,5 Gew.-% und am bevorzugtesten zu mindestens 99,9 Gew.-% aus einem oder mehreren aliphatischen Diisocyanaten I) und einem oder mehreren aliphatischen Diolen II), bezogen auf die Gesamtmasse des Polyurethanpolymers, besteht.

7. Formmasse gemäß einem der vorhergehenden Ansprüche, **dadurch gekennzeichnet, dass** das eine oder die mehreren aliphatischen Diisocyanate I) ausgewählt sind aus der Gruppe bestehend aus 1,4-Diisocyanatobutan, 1,5-Diisocyanatopentan, 1,6-Diisocyanatohexan, 2-Methyl-1,5-diisocyanatopentan und / oder Mischungen aus mindestens zwei hieraus, vorzugsweise 1,5-Diisocyanatopentan und / oder 1,6-Diisocyanatohexan.

8. Formmasse gemäß einem der vorhergehenden Ansprüche, **dadurch gekennzeichnet, dass** das eine oder die mehreren aliphatischen Diole II) ausgewählt sind aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol und / oder Mischungen aus mindestens zwei hieraus, vorzugsweise 1,3-Propandiol, 1,4-Butandiol, 1,6-Hexandiol und / oder Mischungen aus mindestens zwei hieraus, besonders bevorzugt 1,4-Butandiol.

9. Formmasse gemäß einem der vorhergehenden Ansprüche, **dadurch gekennzeichnet, dass** die Komponente A einen Urethangruppengehalt von 40 Gew.-% bis 60 Gew.-%, vorzugsweise von 40 Gew.-% bis 52 Gew.-%, bezogen auf das Gesamtgewicht des thermoplastischen Polyurethanpolymers aufweist.

10. Formmasse gemäß einem der vorhergehenden Ansprüche, **dadurch gekennzeichnet, dass** die Komponente A ein semikristallines thermoplastisches Polyurethanpolymer ist.

11. Formmasse gemäß einem der vorhergehenden Ansprüche, **dadurch gekennzeichnet, dass** die Komponente A einen Glasübergangspunkt von < 50 °C, vorzugsweise im Bereich zwischen ≥ 0° C und < 50 °C aufweist, bestimmt mit Differential Scanning Calorimetry gemäß DIN EN 61006 (November 2004).

12. Formmasse gemäß einem der vorhergehenden Ansprüche, **dadurch gekennzeichnet, dass** die Komponente A einen Schmelzpunkt von > 150 °C, vorzugsweise im Bereich zwischen 150 °C und 200 °C aufweist, bestimmt mit Differential Scanning Calorimetry gemäß DIN EN 61006 (November 2004).

13. Formmasse gemäß nach einem der vorhergehenden Ansprüche, **dadurch gekennzeichnet, dass** die zur Erzeugung der Komponente A eingesetzten Aufbaukomponenten zu 95 Gew.-% bis 99,9 Gew.-% aus einem oder mehreren aliphatischen Diisocyanaten I) und einem oder mehreren aliphatischen Diolen II) und zu 0,1 Gew.-% bis 5 Gew.-% aus einem oder mehreren Polyisocyanaten III) und / oder einer oder mehreren NCO-reaktive Verbindungen IV)

bestehen, bezogen auf die Gesamtmasse der eingesetzten Aufbaukomponenten.

**14.** Verwendung einer Formmasse gemäß einem der vorhergehenden Ansprüche zur Herstellung von Formkörpern.

**15.** Formkörper enthaltend eine Formmasse gemäß einem der Ansprüche 1 bis 13.

**Abbildung 1**

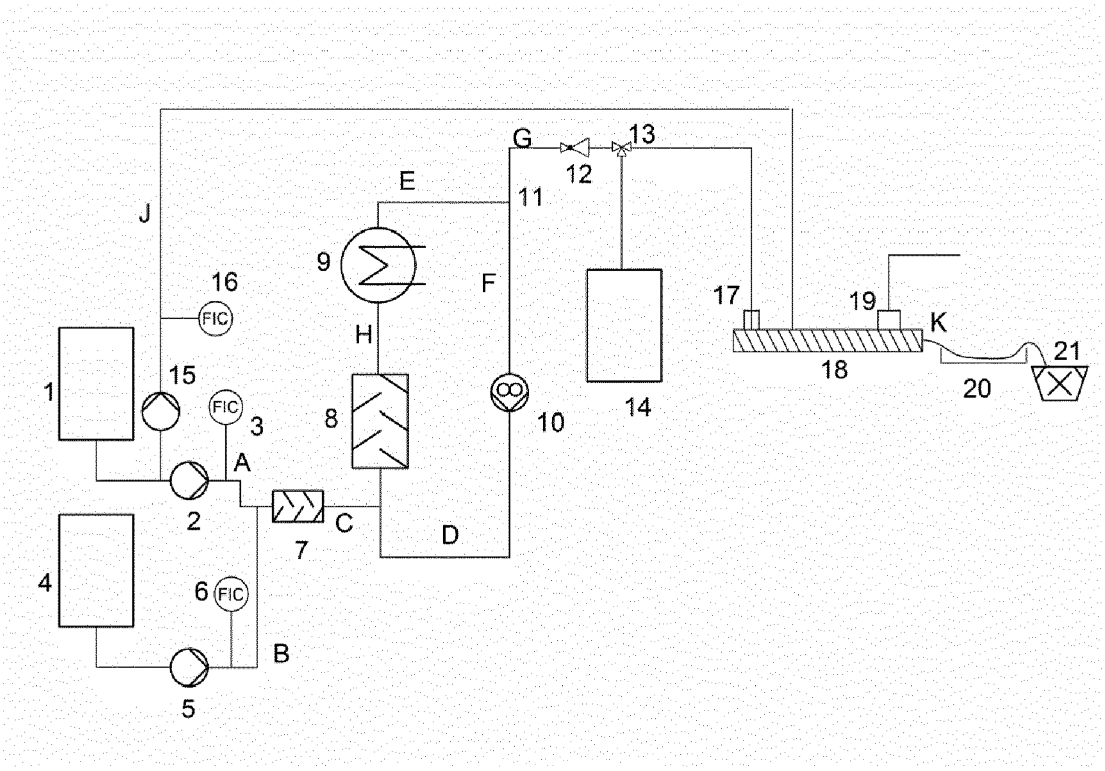
G
12
13
E
11
J
9
F
16
FIC
17
19
H
K
1
15
FIC
3
8
10
14
18
21
A
20
2
C
D
7
4
6
FIC
B
5

Europäisches Patentamt
European Patent Office
Office européen des brevets

# EUROPÄISCHER RECHERCHENBERICHT

Nummer der Anmeldung
EP 20 21 5425

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2 284 637 A (CATLIN WILLARD E) 2. Juni 1942 (1942-06-02)<br>* Spalte 1, Zeilen 25-44 *<br>* Spalte 5, Zeilen 32-48; Beispiel III *<br>----- | 1-15 | INV.<br>C08G18/08<br>C08G18/32<br>C08G18/73<br>C08K5/00<br>C08K5/134<br>C08K5/20<br>C08K5/13<br>C08G18/80 |
| Y,D | DE 728 981 C (IG FARBENINDUSTRIE AG) 7. Dezember 1942 (1942-12-07)<br>* Seite 1, Zeilen 1-38; Beispiele 12, 15, 16, 26 *<br>----- | 1-15 | |
| Y | US 5 574 092 A (ORIANI STEVEN R [US] ET AL) 12. November 1996 (1996-11-12)<br>* Spalte 1, Zeilen 6-17, 50-61; Beispiel 1; Tabellen II, III *<br>----- | 1-15 | |
| Y | DE 10 2016 114828 A1 (COVESTRO DEUTSCHLAND AG [DE]) 15. Februar 2018 (2018-02-15)<br>* Absätze [0001], [0006], [0011], [0023]; Beispiele *<br>----- | 1-15 | |

RECHERCHIERTE SACHGEBIETE (IPC)

C08G
C08K

Der vorliegende Recherchenbericht wurde für alle Patentansprüche erstellt

2

| Recherchenort | Abschlußdatum der Recherche | Prüfer |
|---|---|---|
| München | 8. Juni 2021 | Eigner, Markus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 20 21 5425

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-06-2021

| Im Recherchenbericht angeführtes Patentdokument | Datum der Veröffentlichung | Mitglied(er) der Patentfamilie | Datum der Veröffentlichung |
|---|---|---|---|
| US 2284637 A | 02-06-1942 | KEINE | |
| DE 728981 C | 07-12-1942 | KEINE | |
| US 5574092 A | 12-11-1996 | BR 9610619 A | 16-03-1999 |
| | | CA 2230458 A1 | 03-04-1997 |
| | | DE 69602376 T2 | 09-09-1999 |
| | | EP 0852592 A1 | 15-07-1998 |
| | | ES 2130852 T3 | 01-07-1999 |
| | | JP H11511508 A | 05-10-1999 |
| | | KR 19990063710 A | 26-07-1999 |
| | | TW 452582 B | 01-09-2001 |
| | | US 5574092 A | 12-11-1996 |
| | | WO 9711980 A1 | 03-04-1997 |
| DE 102016114828 A1 | 15-02-2018 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 728981
- EP 0403921 B


### In der Beschreibung aufgeführte Nicht-Patentliteratur


- **O. BAYER.** *Angew. Chem.,* 1947, vol. 59, 257-288
- **V. V. KORSHAK.** *Soviet Plastics,* 1961, vol. 7, 12-15
- **G. OERTEL.** *Kunststoff-Handbuch,* 1993, vol. 7, 12ff
- Methoden der organischen Chemie. **HOUBEN-WEYL.** Makromolekulare Stoffe. Georg Thieme Verlag, 1987, vol. E20, 1587-1593
- *Justus Liebigs Annalen der Chemie,* 1949, vol. 562, 75-136
- *CHEMICAL ABSTRACTS,* 23128-74
- *CHEMICAL ABSTRACTS,* 36443-68-2
- *CHEMICAL ABSTRACTS,* 2082-79-3
- *CHEMICAL ABSTRACTS,* 1709-70-2
- *CHEMICAL ABSTRACTS,* 90498-90-1
- *CHEMICAL ABSTRACTS,* 40601-76-1
- *CHEMICAL ABSTRACTS,* 35074-77-2
- *CHEMICAL ABSTRACTS,* 128-37-0
- *Firma Witte Chem,* vol. 25, 6-3